# EUROPEAN PATENT APPLICATION

(11) **EP 4 687 335 A1**
(43) Date of publication of application: **04.02.2026**
(21) Application number: 24205910.3
(22) Date of filing: 10.10.2024
(51) Int. Cl.: H04L 49/15, H04L 49/00, H04L 49/45, H04L 49/65

(54) **METHODS FOR CONFIGURING FLEXIBLE MAC GROUP TO PACKET FORWARDING ENGINE (PFE) CONNECTIONS, AND DEVICES WITH FLEXIBLE MAC GROUP TO PFE CONNECTIONS**

(30) Priority: 29.07.2024 US 202418787895
(71) Applicant: Juniper Networks, Inc., Sunnyvale, CA 94089-1206 (US)
(72) Inventor: ZHOU, Aibing, Sunnyvale, 94089 (US); THOMAS, Philip A., Sunnyvale, 94089 (US); OFELT, David, Sunnyvale, 94089 (US); SRINIVASAN, Eswaran, Sunnyvale, 94089 (US)
(74) Representative: D Young & Co LLP

(57) **Abstract**

A data forwarding device includes a plurality of Ethernet MAC group (EMG) modules, each servicing a group of one or more Ethernet ports, a plurality of packet forwarding engines (PFEs), each configured adapted to process packets received from one or more of the EMG modules, and a set of configurable interconnect data links between at least one of the EMGs and at least one of the PFEs. A configuration input for configuring the set of configurable interconnect data links is received (e.g., from user interface), and applied such that a set of one or more PFEs receives packets from a set of one or more EMG modules, via one or more of the configurable interconnect data links, in accordance with the configuration input received.

## Description

### § 1. BACKGROUND

### § 1.1 FIELD OF THE INVENTION

The present application concerns devices used in communications networks, such as routers and/or switches for example. More specifically, the present application concerns the packet forwarding part of such devices.

### § 1.2 BACKGROUND INFORMATION

Please note that the disclosure in this section is not an admission of prior art.

### § 1.2.1 PARTS OF AN EXAMPLE ROUTER

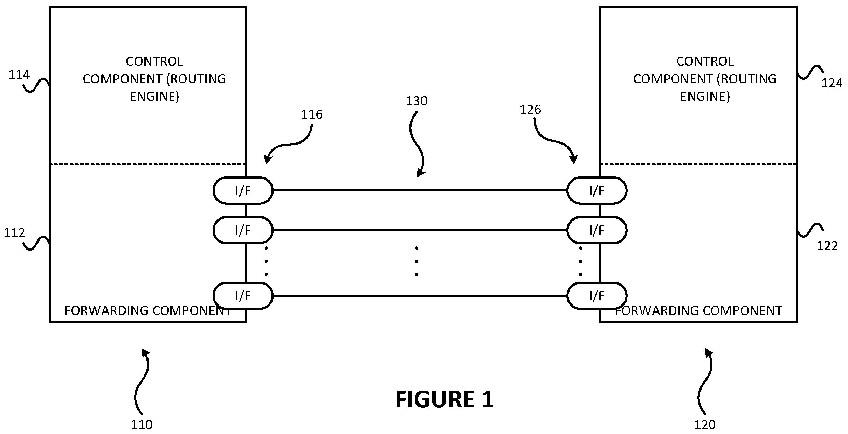

Nodes in a data communications network may be data forwarding devices, such as routers for example. Figure 1 illustrates two data forwarding devices 110 and 120 coupled via communications links 130. The links may be physical links or "wireless" links. The data forwarding devices 110,120 may be routers for example. If the data forwarding devices 110,120 are example routers, each may include a control component (e.g., a routing engine) 114,124 and a forwarding component 112,122. Each data forwarding device 110,120 includes one or more interfaces 116,126 that terminate one or more communications links 130.

Although routers and their components are generally understood by those skilled in the art, major components of an example router, as well as their functions, are discussed.

The control component (also referred to as "the control plane") 114,124 functions to discover the network's topology and compute loop-free, optimal routes. It is where routing protocols, such as Open Shortest Path First (OSPF), Intermediate System-Intermediate System (IS-IS) and Border Gateway Protocol (BGP), and signaling protocols, such as Resource reSerVation Protocol (RSVP) and Label Distribution Protocol (LDP), run and where the routing tables (also referred to as Routing Information Bases (RIBs)), including multicast reverse path checking tables and Virtual Routing and Forwarding (VRF) tables, are instantiated and populated. The control plane includes the kernel and daemons. The control plane may also provide an interface for configuring and monitoring the router.

The control plane, usually implemented on a Routing Engine (RE), which is also known as a Supervisory Engine, a Route Processor, among other names, is based on an operating system, called a Network Operating System (NOS) (such as Junos from Juniper Networks, Inc. of Sunnyvale, CA). The RE runs on a general purpose processor because the computational and memory resources it requires are complex. Consequently, a software implementation is preferred. The control plane can be thought of as the router's brain and its computational element.

The forwarding component (also referred to as "the forwarding plane") 112,124 functions to transfer data packets from an ingress interface (port) to an egress interface (port) so as to move each packet a hop closer to its ultimate destination. By traversing a chain of forwarding plane instances, each contained within a router, a data packet completes its trip from source to destination. Unlike the control plane, which only looks at control (such as OSPF Link State Updates and RSVP-TE PATH and RESV messages) and management packets (such as SNMP messages), each and every packet arriving at the router is processed by the forwarding plane.

A proper understanding of the networking dynamics calls for establishing a clear distinction between what is relevant to routing time (also called convergence time) versus what is relevant to forwarding time. To begin with, mapping the topology and computing loop-free paths is the duty of the router's control plane. The forwarding plane gets the routes from the control plane and trusts them. (Lacking the global topological view, the forwarding plane has no way to decide on whether or not they are loop-free or optimal.) On the other hand, when (equal cost) multiple paths (next hops) exist (i.e., when Equal Cost Multi Path or ECMP is present), even though the routing plane identifies them and pushes them to the forwarding plane, the routing plane doesn't decide on the specific next hop taken by each particular flow of packets. This load balancing decision is taken at forwarding time by the forwarding plane. When an action needs to be taken near instantly (e.g., at line speed), it is to be taken at the forwarding plane. Local protection mechanisms depend on installing backup paths in the forwarding plane so that they may be immediately enacted without waiting for the lengthy traditional Interior Gateway Protocol (IGP) convergence that takes place in the control plane.

The control plane's main function, in addition to providing an interface to manage the router, is to program the forwarding plane with the information required to do its job in the form of a table mapping network destinations to egress interfaces. This table is known as the Forwarding Information Base (FIB), or the forwarding table.

Although the control plane and the forwarding plane used to share resources, today they are typically separated. The separation ensures that the forwarding of packets is not impacted by surges of control activity in the control plane and even continue during brief periods of control plane instability or unavailability. With a Software Defined Network (SDN) approach to networking, the control plane doesn't have to be bundled with the forwarding plane in a single box. Rather, the control plane be provided remotely and command the forwarding plane over the network. In such a context, the control plane element is called a "controller" and may centrally preside over a number of forwarding machines in the network, using a variety of new "SDN" protocols (such as OpenFlow or Path Computing Element Protocol (PCEP), for example). With such an arrangement, the controller can provide network operators and administrators with an abstract, holistic view of the network and enable its programming via an interface called a Northbound Interface. The controller could leverage its global, complete view of the network to provide optimization and agile provisioning. The SDN evolution facilitates control plane programmability.

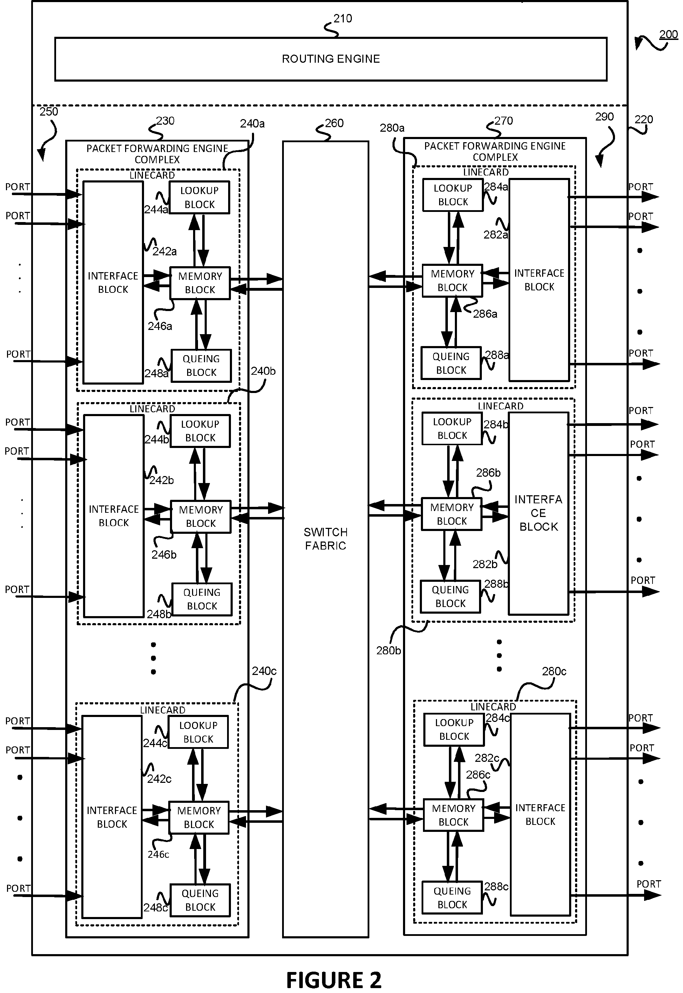

The forwarding component 112,122 may be, or many include, a Packet Forwarding Engine (PFE). Functions, basic workings, components and features of an example PFE are discussed with reference to Figure 2.

A router can be thought of as a packet switching device. It is a node in a communications network topology. A router receives a packet on an inbound interface (the ingress interface), looks at the destination address in the packet's header, and determines, based on that, the outgoing interface (the egress interface). The actual packet movement from an ingress (input) interface to an egress (output) interface is commonly referred to as "forwarding." Therefore, a router, thus, may also be called a "forwarder."

Referring to Figure 2, in addition to a chassis and power supplies, a router 200 typically includes a Routing Engine (RE) 210, a set of linecards 240/280, and a switch fabric 260. The RE 210 embodies the control plane. The set of linecards 240/280 interconnected by the switch fabric 260, together represent the forwarding plane (also called the data plane). Each linecard 240/ 280 hosts the network ports (router interfaces) 250/290 that send and receive traffic (e.g., packets), to and from links, and one or more ASIC (Application Specific Integrated Circuit) chips or chipsets (chip complexes), each called a Packet Forwarding Engine (PFE) 230/270. The forwarding intelligence, the ability to parse and understand packet headers, lies in the PFE 230/270.

The PFE 230/270 is the centerpiece of the forwarding plane. It is implemented typically as an ASIC chip or a chipset residing on a linecard 240/280. Although the PFE 230/270 could also be implemented as a piece of code as in virtualized platforms, the following discussion focuses on hardware PFEs 230/270. The PFE 230/270 is the component that "understands" packets in that it can decode their headers. In essence, the PFE 230/270 is a header processing and forwarding lookup engine. The PFE 230/270 houses the FIB (forwarding table) mentioned earlier and uses it, upon inspecting the packet's header, to determine to which egress port the packet is to be sent. Each entry in the FIB is a masked prefix (a network address coupled with a string of bits that indicate which bits of the address are the network part).

Even though multiple entries can match the destination address in a packet, the most specific match is chosen. Seeking the best matching entry (the longest, the most specific) in the FIB is called a "route lookup" (even though it is actually a forwarding lookup). The process of seeking the most specific match is known as the Longest Prefix Match (LPM). In case of ECMP, as highlighted earlier, the PFE 230/270 will select one of the outgoing interfaces.

When the PFE 230/270 receives a packet, it places the packet in a temporary memory block called a "buffer", inspects its destination address, looks for an LPM match for the destination in the FIB (forwarding table) and determines, accordingly, the next hop and the outgoing interface. It then performs some processing to the packet's header and sends it on its way. Referring to Figure 2, the side that connects the PFE 230/270 to the network ports 250/290 is called its "WAN Side," while the side that connects the PFE 230/270 to the switch fabric 260 is called its "Fabric Side." (This description is simplified, as the packet actually arrives encapsulated in a frame (an Ethernet frame most commonly) with layer 2 headers and trailers. Upon entering the PFE 230/270, these are error-checked and stripped away before the packet is processed. Before leaving the router, a layer 2 header and a trailer are also added to the packet.)

From the description above, it is clear that the PFE 230/270 contains a buffer memory to hold packets, a memory element for holding the FIB and a lookup module 244 that maps the destination address of the packet to a next hop or a bunch of next hops in the case of load balancing over equal cost multipath (ECMP). Functional blocks of the PFE 230/270 are described below.

A main component of the PFE 230/270 is the routing Lookup Block 244, known also as the Route Block, L Block, R Block, LU Block, etc. The Lookup Block 244 hosts the FIB (the real FIB, that actually forwards packets). The FIB constructed in the RE 210 is a copy that gets downloaded to the PFE 230/270 in order to be actionable. The FIB is a table in that it hosts a list of data. In implementation, it is usually a tree-like structure, called a "trie" (coming from the word retrieval and pronounced tree) stored in a fast Dynamic RAM variant (such as Reduced Latency RAM or RLDRAM). (Employing a trie on RLDRAM is not the highest performance option but the most scalable one given the enormous size routing tables (e.g., hundreds of thousands of entries or even a couple of millions). Ternary Content Addressable Memory (TCAM) is much faster in doing LPM but is complex, has a high power consumption and takes up a large area on the chip.)

The Lookup Block 244 is also used to identify the logical interface (called an "ifl" or a "unit" by Junos and a "sub-interface" by other Network Operating Systems) that the packet arrived on. (Note that modern routers pretend that each packet arrives not on the physical interface but on a virtual interface contained within it.) The determination of an ifl is usually based on a demultiplexing field within the packet, such as a VLAN ID. Each of these ifls is treated as a full-fledged interface in that it gets an IP address and is associated with services such as firewall filters (access lists or ACLs), policers and/or classifiers.

The Memory Block 246 of the PFE 230/270 is a buffer that hosts packets arriving to the PFE from the WAN Side. It is usually the PFE block to which all other blocks are connected. Commonly, it is implemented using a fast memory type called Static RAM (SRAM). It is called the Buffer Block, Memory block, B Block, M Block, XM Block or MQ (as it can do some basic, port level queueing) or other names alluding to its function. The Memory Block 246 queues packets and manages their dequeuing into the switch fabric 260 or out to the network ports 250/290. It extracts the packet's header and feeds it to the Lookup Block 244 to determine where the packet should be sent.

Another function usually done by the Buffer (Memory) Block is "cellification." Switching hardware can be better optimized when the data units are of fixed size. Therefore, packets, which are of variable length, are typically divided into short, fixed-sized pieces called cells (or J-Cells in a Juniper Networks router). This cellification is conducted by the PFE 230/270 (typically by the Memory Block) before the route lookup is performed and before the packet is sent over the switch fabric 260 (or towards other WAN interfaces in same PFE 230/270).

The first J-Cell (the one that contains the header and determines the packet's forwarding destiny) is called a Notification Cell (NC). The remaining J-Cells are called Data Cells (DCs). This cellification happens as soon as the packet is received and initial layer 2 processing is completed. Only the Notification Cell is read into the Lookup (Route) Block 244 (the Notification Cell is sometimes called the packet's HEAD). The Data Cells (constituting the packet's TAIL) wait in a buffer for the Notification Cell to be processed and the next hop to be determined. After that, the Data Cells stream through the PFE 230/270 or through the PFE 230/270 and switch fabric 260 to the outbound interface (undergoing a second lookup if that interface is on a different PFE). The cells are reassembled into a packet before they leave the egress PFE 230/270.

In some designs, interfaces are not connected directly to the Buffer Block but are connected to an Interface Block (called I Block, XI Block, etc.) 242 that sits between interfaces and the Memory Block (see the diagram) 246. In such cases, functions usually performed by the Buffer Block such as queueing (and handling oversubscription) are delegated to the Interface Block 242. In some PFE designs, there is a Fabric Block (called F Block, XF Block, or a variation thereof) that serves as an mediator between the Memory Block 246 and the switch fabric 260.

Basic Queueing, which determines the order of servicing packets and the priority and resources (such as bandwidth and buffer space) allocated to each packet, is handled by the Memory Block 246, as mentioned above (and for that reason, it is sometimes called MQ). Some applications require more granular queueing to deal with multiple subscribers served by a single port. In such applications, queueing calls for an additional block called the Queueing Block 248, which provides multi-level hierarchical Class of Service (CoS) and queueing.

To reiterate, the forwarding lookup is an important function of the PFE 230/270. This is complemented by some layer 2 processing, which usually involves associating the packet with an ifl (a logical interface, a unit or a sub-interface). The lookup includes a Media Access Control (MAC) address lookup, which identifies the MAC address of the next hop. Sometimes it includes a label lookup as well (for MPLS traffic).

To enable more flexibility and granularity in traffic engineering, forwarding is not confined to destination-based forwarding. The forwarding of a packet by the PFE 230/270 can consider other packet fields such as the source address, the value of the TOS (Type of Service) Byte and the UDP and TCP port numbers. Forwarding based on such fields may be referred to as Filter-based Forwarding (FBF), Policy-based Routing (PBR), etc. With FBF, the FIB will contain a mapping between, not only destination addresses, but also other packet fields (called Keys) and next hops.

In addition to the inclusion of more packet fields in the forwarding decision process, labels were introduced into the packet switching world by the advent of Multi-Protocol Label Switching (MPLS). With the advent of MPLS, the FIB became a place for storing label forwarding entries as well as prefixes. When a labeled packet arrives at PFE 230/270, its upper (outermost) label is inspected and a matching entry is sought in the FIB using a hash table. The matching entry will indicate the next hop. The next hop will specify the outbound interface, the MAC address of the interface of the next router along the path in addition to a label operation and a label value if the operation is a swap or push. In most transit routers, this operation is a swap operation, but could also be a pop, a push or a combination of operations, depending on the router's location within the topology and the services (such as local protection or fast reroute) it is offering.

In addition to Policy-based routing and MPLS, new forwarding functions, called forwarding services (or simply services), may be incorporated into the PFE 230/270 to achieve various performance, security and monitoring objectives. With the introduction of services demand from the PFE 230/270 became more than the relatively simple lookup and forward sequence. Services are additional functions, which are mostly handled by the Lookup Block 244, that either manipulate the packet's header, the entire packet or determine whether the packet is to be forwarded or not, how fast the packet is to be forwarded and how much resources are allocated to servicing the packet such as bandwidth and buffer space. Some services, such as multicast and sampling don't change packets. Some services, such as NAPT, manipulate addressing and port fields located in the header. Some services such as IPSec encryption, radically change packets and their headers. Services required to offer Class of Service (CoS) include classification, policing, filtering, scheduling (forwarding prioritization and bandwidth allocation), shaping and marking (coloring).

Encapsulation and decapsulation, needed for tunneling (such as GRE tunneling, IPSec encapsulation or the multicast-in-unicast tunneling required as part of Protocol Independent Multicast-Sparse Mode (PIM-SM) operation) are also additional services that may be required from the PFE 230/270. In the past, many of these services, such as NAPT, tunneling, sampling and flow export (jflow), necessitated the use of special linecard or module. Today, the lookup block 244 of the PFE 230/270 is capable of doing most of these services (service are called "inline", when done by the Lookup Block 244 in the PFE rather than a dedicated hardware module).

To summarize, a PFE 230/270 performs route, flow, MAC and label lookups, in addition to classification, scheduling (queueing and dequeuing), policing, filtering, accounting, sampling, mirroring, unicast and multicast reverse path checking, class-based routing, packet header re-writes, coloring (marking), encryption, decryption, encapsulation, and decapsulation. More recently, the latest PFEs 230/270 can do telemetry and even participate in the generation of packets for bi-directional forwarding detection (BFD), a lightweight liveness protocol for rapid link failure detection).

The following describes a data packet (not a control packet) in its journey through the example router. A packet is received on an ingress physical interface (built on or pluggable module). This is typically associated with the conversion from optical signaling to electrical. The received packet is then transferred to the PFE 230/270 through the PFE's WAN side. Next, the packet is stored in a Memory Block (buffer) 246 in the PFE 230/270. Layer 2 (Link Layer) frame encapsulation is processed. (This involves error checking, identifying the encapsulated protocol (whether the packet is IPv4, IPv6 or MPLS) and stripping out the layer 2 headers.) The packet is typically chunked into cells. The packet's header (HEAD) is sent to the Lookup Block 244 (typically in the form of a Notification Cell), where the destination address in the packet is mapped to an egress interface by looking up the address (or the label, if MPLS or Segment Routing (SR) is used) in the forwarding table. The Lookup Block 244 may also determine the destination MAC address it should have upon leaving the router 200. The Lookup Block 244 may also be responsible for identifying the logical interface (ifl) the packet belongs to and applying any of the services discussed above, such as network address translation, policing and the like. (Recall that an ifl is a virtual construct with no physical manifestations. Identifying a packet as belonging to an ifl means that this packet will be processed according to the parameters associated with that ifl (such as multi-field classification or filtering). In a way, the ifl is a packet processing profile. For the outside world, only physical interfaces (ifd's) are real. Determining the ifl the packet belongs to is based on some demultiplexing field, typically the VLAN ID.)

The lookup may result in multiple valid next hops (such as, for example, Equal Cost Multi Path or ECMP interfaces). In such a case, a single egress interface is selected based on a hashing value computed from the fields in the packet (called hashing keys), ingress Interface and/or other parameters. Using a hash ensures that packets belonging to the same flow follow the same path in order to avoid being reordered. The value in the packet's Time To Live (TTL) is decremented and the checksum field is recomputed (if the packet is an IPv6 packet, then the Hop Count is decremented and there is no checksum field).

Note that the egress interface determined by the lookup could be in the same PFE 230/270, same linecard 240/280 but on a different PFE 230/270, or in different linecards 240/280 altogether. If the egress interfaces is on the same PFE 230/270, then it is sent to it directly where it gets encapsulated in a layer 2 frame and put into the link. If the egress interfaces is on another line card, then the packet is transmitted, via the switch fabric 260, to that other linecard 240/280 where another lookup takes place.

The foregoing description assumes that a route exists for the packet, that the frame is not corrupted, the TTL is larger than 1 and that no services other than unicast forwarding are required (no multicast, no sampling, no classification, no rate limiting, no filtering and no address translation). It also assumes no Ethernet frame.

Today, a PFE 230/270 is a specialized piece of silicon-ware implemented as an Application Specific Integrated circuit (ASIC), a set of ASICs or based on a specialized type of processor called an NPU (Network Processor Unit). An NPU can be thought of as a programmable PFE 230/270 that has some fundamental forwarding primitives burned-in (built-in), while at the same time being programmable via what is known as microcode. Generally speaking, a more hardwired the design has higher performance, but less flexibility to add features.

A linecard 240/280 is engineered to host one or more PFE complexes that are typically fixed on the linecard. Interfaces (ports) 250/290 hosted on the linecard may be built-in or modular. Juniper Networks calls a card that carries interfaces, a Physical Interface Card (PIC). A linecard is called a PIC Concentrator (PC). Linecards for some early platforms were called Flexible PIC Concentrators (FPC), Dense PIC Concentrators (DPCs), MPC (Modular PIC Card), etc. In some example routers, a linecard hosts one, two or a handful of PFE complexes. Utilizing multiple PFEs in a linecard is a way of reusing an existing PFE to scale the capacity of the PFE.

The word "PFE" is sometimes used to refer to the chipset, sometimes to all PFE complexes on a certain linecard and sometimes (very loosely) to the entire forwarding plane, which typically includes more than a PFE (two for unicast, more for multicast) in addition to the fabric.

### § 1.2.2 FORWARDING PLANE COMPONENTS AND THEIR LIMITATIONS

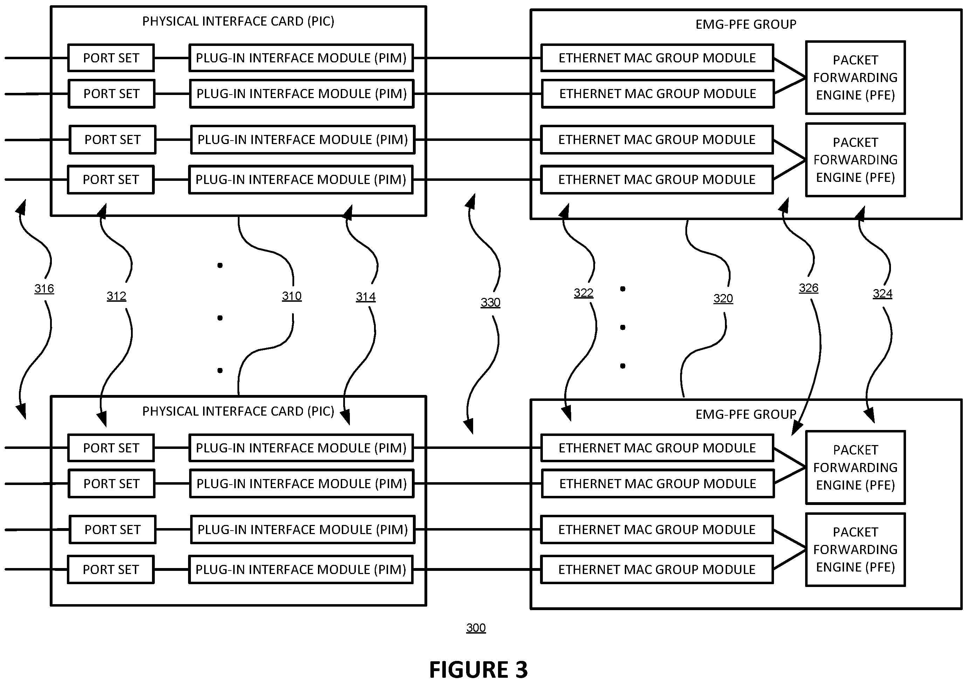

Figure 3 illustrates a portion 300 of an example forwarding component, such as those 112/122 of Figure 1. As shown, a plurality of physical interface cards (PICs) 310 and a plurality of Ethernet MAC group (EMG)-PFE groups 320 are provided. Each of the plurality of PICs 310 includes a plurality of port sets 312 (each port set including one or more ports) coupled with one or more plug-in interface modules (PIMs) 314. Each of the port sets 312 terminates one or more communications links 316. Each of the plurality of EMG-PFE groups 320 includes a plurality of Ethernet MAC group (EMG) modules 322 and a plurality of Packet Forwarding Engines (PFEs) 324. A set of one or more links 330 is provided between the PIC 310 and the EMG-PFE group 320. These links 330 may be channelized and/or non-channelized. Further, a set of interconnect data links 326 are provided between the EMG modules 322 and the PFEs 324. In this example, the interconnect data links 326 provide static (i.e., fixed) connections.

In one example implementation of 300, the port groups 312 within a PIC 310 include, respectively, 18 ports - (1) Port 0; (2) Ports 2,4,6,8,10,12,14,16; (3) Ports 3,5,7,9,11,13,15,17; and (4) Port 1. The PIMs 314 within a PIC 310 include, two eight-lane PIMs (associated with Port 0 and Port 1), each terminating a 8x112 Gbps link 130, and two eight-by-112 Gbps PIMs (associated with Ports 2,4,6,8,10,12,14,16 and Ports 3,5,7,9,11,13,15,17), each terminating eight 112 Gbps links 330. Further, one or more EMG modules 322 is linked, statically, via fixed interconnect data links 326, to a PFE 324. In the example 300 shown, two EMG modules 322 are linked, statically, via two static interconnect data links 326, to a single PFE 324. In one specific implementation, each EMG module 322 is a so-called PMP module from Juniper Networks, Inc., of Sunnyvale, CA, which performs port group IO (PGIO), Media Access Control Security (MACSec), and packet test-on-chip (PTOC), though these functions are not necessary. The interconnect data links 326 may be SERDES (SERializer/DESerializer) links.

Still referring to Figure 3, the XT ASIC in the Trio ASIC series from Juniper Networks, Inc. supports slice pairs, each with two PFEs 324. The XT ASIC is a 3.2 Tbps ASIC which supports four PFEs 324, with each PFE being 800 Gbps capable. In these ASICs, each PFE is referred as a "slice" and a pair of slices is referred as "slice-pair." Hence, XT supports two slice-pairs, with each slice-pair being 1.6 Tbps capable.

The XT ASIC supports four EMG modules 322 per slice-pair. Each EMG module 322 supports a maximum of eight Ethernet MACs. The four EMG modules 322 can be shared by the two PFEs 324 in a slice-pair. This enables the customers to have different numbers of Ethernet MACs per PFE. With this, a customer can have a smaller number of high speed ports in one PFE and a large number of low speed ports in an another PFE of the same line card.

### § 1.2.2.1 LIMITATIONS OF EXISTING FORWARDING PLANES

The example portion 300 of the example forwarding component may be implemented on an application specific integrated circuit (ASICs), such as Trio or Express from Juniper Networks. In the example portion 300, a set of EMG modules 322 are attached statically, to PFEs 324. For example, early generation ASICs supported one PFE per ASIC. Current generation (circa 2024) ASICs support two or four PFEs per ASIC. In all the cases, each PFE has a dedicated (due to the static attachment) set of Ethernet MACs (via the EMG modules). Consequently, all the PFEs in a line card had the same number of Ethernet MACs.

Typically, the network operators and administrators want to have different numbers of Ethernet ports and speeds per packet forwarding engine (PFE) in a line card. Some network operators and administrators also would prefer to have a smaller number of high speed ports (e.g., for higher speed uplinks) in one PFE and/or a larger number of low speed ports (e.g., for lower speed downlinks) in an another PFE of the same line card. This is not possible with existing forwarding planes such as that described above with respect to Figure 3 because the EMG modules 322 (and their corresponding MAC groups) are statically associated with a PFE 324. More specifically, certain network operators and administrators want to configure the different PFEs of a line card for different roles. For example, some network operators and administrators would like to configure the different PFEs of a line card for access, core, Broadband Network Gateway (BNG), edge aggregation, etc. This indirectly means that the number of Interface Descriptors (IFDs) and/or port speeds per PFE vary between the PFEs in a line card.

Each traffic bearing IFD (channelized or non-channelized) requires a separate Ethernet MAC for packet forwarding. With the fixed number of Ethernet MACs per PFE, this restricts the number of low speed ports per PFE. This is primarily due to the fact that the unused Ethernet MACs of a PFE can't be used by an another PFE.

Therefore, forwarding components permitting more flexible allocation of PFEs to Ethernet MAC groups is desired.

### § 2. SUMMARY OF THE INVENTION

Particular embodiments are set out in the independent claims. Various optional examples are set out in the dependent claims. The present description enables Ethernet MACs to be made as a global resource for a set of PFEs. This will allow the PFEs to use the Ethernet MACs based on the number of IFDs per PFE. Consider a data forwarding device including (1) a plurality of Ethernet MAC group (EMG) modules, each servicing a group of one or more Ethernet ports, and (2) a plurality of packet forwarding engines (PFEs), each adapted to process packets received from one or more of the EMG modules. An example method includes: (a) configuring, at a first time, the data forwarding device so that one of the PFEs receives packets from a first set of zero or more EMG modules; and (b) configuring, at a second time, the data forwarding device so that the one of the PFEs receives packets from a second set of zero or more EMG modules, wherein the second set of zero or more EMG modules is different from the first set of EMG modules.

In some example implementations, the first set of zero or more EMG modules terminates one or more links having a first total bandwidth, a throughput rate of the one of the PFEs is greater than the first total bandwidth, the second set of zero or more EMG modules terminate one or more links having a second total bandwidth, and the throughput rate of the one of the PFEs is greater than the second total bandwidth.

In some example implemenations, at a first time, the data forwarding device is configured so that one of the PFEs receives packets from a first set of at least two EMG modules.

In some example implemenations, the plurality of EMG modules, and the plurality of PFEs are provided on a single application specific integrated circuit (ASIC) chip. The plurality of EMG modules may be greater in number than the plurality of PFEs.

Also described is an example data forwarding device including: (a) a plurality of Ethernet MAC group (EMG) modules, each servicing a group of one or more Ethernet ports; (b) a plurality of packet forwarding engines (PFEs), each adapted to process packets received from one or more of the EMG modules; (c) a set of interconnect data links between the plurality of EMG modules and the plurality of PFEs, wherein at least one of the EMG modules can transmit packets to a selectable one of at least two of the plurality of PFEs; and (d) a user-interface module adapted to receive a configuration configuring an association of each of the plurality of EMG modules with each of the plurality of PFEs to define a set of active interconnect data links within the set of interconnect data links.

In some example data forwarding devices, the user-interface module is adapted to receive a second configuration configuring a second association of each of the plurality of EMG modules with each of the plurality of PFEs, and the second association is different from the first association.

In some example data forwarding devices, at least one of the EMG modules can transmit packets to only one of the plurality of PFEs.

In some example data forwarding devices, the user interface module allows each of at least some of the plurality of PFEs to be configured to enable or disable its being shared by more than one EMG module. In some such data forwarding devices, the enable or disable sharing configuration of a first PFE affects whether or not sharing of a second PFE is enabled or disabled.

In some example data forwarding devices, the set of active interconnect data links within the set of interconnect data links permit one of the EMG modules to transmit packets to at least two PFEs.

In some example data forwarding devices, the set of active interconnect data links within the set of interconnect data links permit one of the PFEs to receive packets from at least two EMG modules.

In some example data forwarding devices, the plurality of EMG modules is greater in number than the plurality of PFEs.

In some example data forwarding devices, at least two of the plurality of PFEs are provided as slices sharing on-chip memory.

In some example data forwarding devices, each of the plurality of PFEs include a lookup sub-system, and the lookup sub-system performs at least some of (A) packet processing, (B) route lookup, (C) label lookup, (D) firewall, and/or (E) packet classification.

In some example data forwarding devices, a first one of the plurality of EMG modules is associated with a first set of at least one first interface module providing a first number of lanes of data, a second one of the plurality of EMG modules is associated with a second set of at least one second interface module providing a second number of lanes of data, and the second number of lanes of data is greater than the first number of lanes of data. In some such example data forwarding devices, the first set of at least one first interface module is associated with, and services, a first number of at least one port, and the second set of a least one second interface module is associated with, and services, a second number of at least one port.

In some example data forwarding devices, the configuration configuring an association of each of the plurality of EMG modules with each of the plurality of PFEs to define a set of active interconnect data links within the set of interconnect data links is one of a plurality of configuration modes, in a first of the plurality of configuration modes, each PFE services the same number of EMG modules, and in a second of the plurality of configuration modes, a first PFE services a first number of EMG modules, and a second PFE services a second number of EMG modules, different from the first number.

In some example data forwarding devices, the plurality of plurality of EMG modules consists of four (4) EMG modules, the plurality of PFEs consists of two (2) PFEs, and the configuration configuring an association of each of the plurality of EMG modules with each of the plurality of PFEs to define a set of active interconnect data links within the set of interconnect data links is one of a plurality of configuration modes, in a first of the plurality of configuration modes, each PFE services two EMG modules, and in a second of the plurality of configuration modes, a first of the two PFEs services one (1) EMG modules, and a second of the two PFEs services three (3) EMG modules.

In some example data forwarding devices, the user-interface module is adapted to display an association of ports and PFEs based on the configuration configuring an association of each of the plurality of EMG modules with each of the plurality of PFEs.

In some example data forwarding devices, the user-interface module is adapted to display, in response to a query to show information about a given interface, any of the plurality of PFEs associated with the given interface based on the configuration configuring an association of each of the plurality of EMG modules with each of the plurality of PFEs.

Consider an example data forwarding device including (1) a plurality of Ethernet MAC group (EMG) modules, each servicing a group of one or more Ethernet ports, (2) a plurality of packet forwarding engines (PFEs), each configured adapted to process packets received from one or more of the EMG modules, and (3) a set of configurable interconnect data links between at least one of the EMGs and at least one of the PFEs. An example method includes: (a) receiving a configuration input for configuring the set of configurable interconnect data links; and (b) applying the configuration input received such that a set of one or more PFEs receives packets from a set of one or more EMG modules, via one or more of the configurable interconnect data links, in accordance with the configuration input received.

### § 3. BRIEF DESCRIPTION OF THE DRAWINGS

Figure 1 illustrates two data forwarding devices, which may be used as nodes, coupled via communications links, in a communications network.
Figure 2 is a block diagram of an example router used to illustrate functions, basic workings, components and features of an example PFE.
Figure 3 illustrates a portion of a forwarding component portion and its limitations.
Figure 4 illustrates an improved forwarding component portion, consistent with the present description.
Figures 5 and 6 are flow diagrams of methods for configuring EMG-PFE interconnect data links to permit a more flexible allocation of PFEs to Ethernet MAC groups.
Figure 7 is a block diagram of an example EMG-PFE group having configurable interconnect data links, which permit a more flexible allocation of PFEs to Ethernet MAC groups
Figure 8 is a block diagram of a router which may be used a communications network, in which example implementations consistent with the present application can be implemented..
Figure 9 is a block diagram of an exemplary machine that may perform one or more of the processes described, and/or store information used and/or generated by such processes.

### § 4. DETAILED DESCRIPTION

The present disclosure may involve novel methods, apparatus, message formats, and/or data structures to permit a more flexible allocation of PFEs to Ethernet MAC groups. The following description is presented to enable one skilled in the art to make and use the described embodiments, and is provided in the context of particular applications and their requirements. Thus, the following description of example embodiments provides illustration and description, but is not intended to be exhaustive or to limit the present disclosure to the precise form disclosed. Various modifications to the disclosed embodiments will be apparent to those skilled in the art, and the general principles set forth below may be applied to other embodiments and applications. For example, although a series of acts may be described with reference to a flow diagram, the order of acts may differ in other implementations when the performance of one act is not dependent on the completion of another act. Further, non-dependent acts may be performed in parallel. No element, act or instruction used in the description should be construed as critical or essential to the present description unless explicitly described as such. Also, as used herein, the article "a" is intended to include one or more items. Where only one item is intended, the term "one" or similar language is used. Thus, the present disclosure is not intended to be limited to the embodiments shown and the inventors regard their invention as any patentable subject matter described.

### § 4.1 DEFINITIONS AND ACRONYMS

***Active Interconnect Data Link,*** an interconnect data link between an EMG module and a PFE that is configured to carry packets.

***Channelized,*** the division of a physical communication link into more than one logical channels, each of which operates independently (e.g., dedicated in terms of bandwidth, signaling, control, etc.)

***Non-Channelized:*** a physical communication link treated as a single entity.

***Ethernet MAC Group (EMG) module,*** a module that may receive packets, for example, from a group of ports (e.g., on a PIC) for a set of one or more MAC addresses. An EMG module may be, in one example, Juniper's PMPs, though this term is not intended to be limited to Juniper's PMPs.

***IFD:*** Interface Descriptor (of physical, not logical, interface)

***Interconnect data link,*** a data link between an EMG module and a PFE for carrying packets from the EMG to the PFE and/or from the PFE to the EMG. A Serializer-Deserializer (SerDes) is an example of an interconnect data link.

***MacSec:*** Media Access Control Security.

A ***"network device"*** includes, but is not limited to, a layer-2 switch, a layer-3 router, or a Transparent Interconnection of Lots of Links (TRILL) routing bridge (RBridge).

***Optical Cage:*** Physical housing that contains the optical transceiver modules used to transmit and receive packets (e.g., encoded as optical signals) over fiber optic cables.

***"Packet"*** refers to a group of bits that can be transported together across a network. "Packet" should not be interpreted as limiting embodiments of the present invention to any networking layer. "Packet" can be replaced by other terminologies referring to a group of bits, such as "message," "frame," "cell," or "datagram." Packet may be a group of bits formed per the Internet Protocol (e.g., IPv4, IPv6, etc.).

***"Packet Forwarding Engine"*** ("PFE") is a component or group of components (e.g., ASICs) used to perform packet forwarding (e.g., at high speeds, with high throughput). The PFE may perform interface, queuing, lookup (e.g., packet processing tasks such as route lookup, label lookup, firewall, hashing, header manipulation, parsing, encapsulation, decapsulation, policing/policy enforcement, and/or classification, etc.) and memory (e.g., on-chip and/or off-chip) access operations. A PFE is typically arranged between communications link interfaces and switch fabric.
***PIC:*** Physical Interface Card
***PGIO:*** Port Group I/O (group of up to eight MACs)
***PTOC:*** Packet Test-On-Chip
**SER/DES:** Serializer/Deserializer

### § 4.2 EXAMPLE APPARATUS

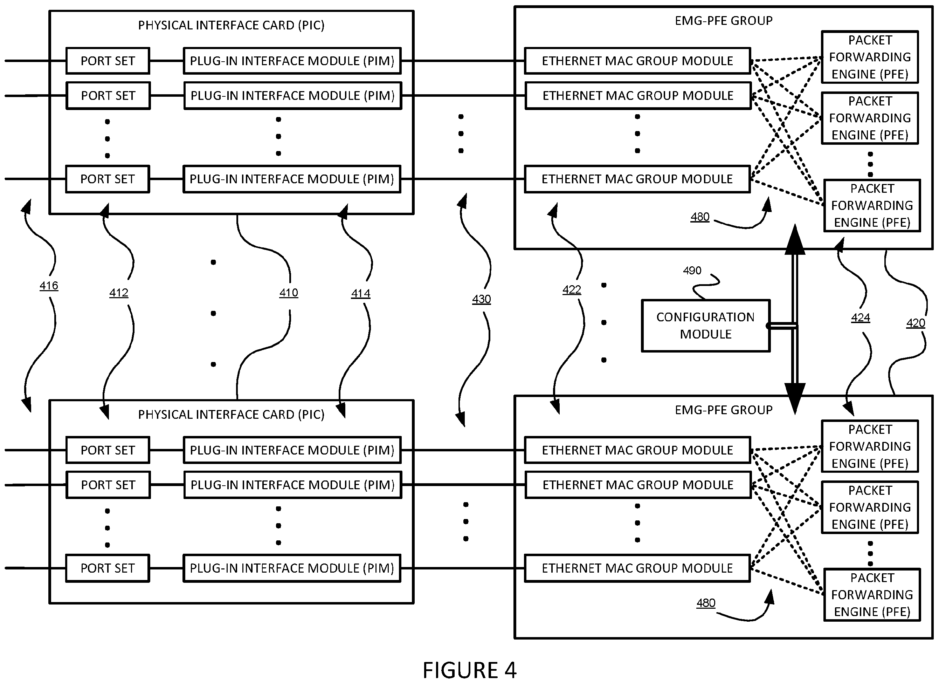

Figure 4 illustrates an improved forwarding (and control) component portion 400, consistent with the present description, which may be used in a forwarding component (and control component) of a data forwarding device, such as those 112/122 of Figure 1. Note that certain elements described with respect to Figure 4 will correspond to similar or the same elements described above with respect to Figure 3. As shown, a plurality of physical interface cards (PICs) 410 and a plurality of EMG-PFE groups 420 are provided. Each of the plurality of PICs 410 includes a plurality of port sets 412 (each port set including one or more ports) coupled with one or more plug in interface modules (PIMs) 414. Each of the port sets 412 terminates one or more communications links 416. Each of the plurality of EMG-PFE groups 420 includes a plurality of Ethernet MAC group (EMG) modules 422 and a plurality of Packet Forwarding Engines (PFEs) 424. A set of one or more links 430 is provided between the PIC 410 and the EMG-PFE group 420. Further, a set of interconnect data links 480, at least one of which (e.g., one, more than one, all, etc.) is configurable (e.g., can be made active or inactive, or which are switchable), are provided between the EMG modules 422 and the PFEs 424. A configuration module 490 may be provided in the control component of a router, and may be used to apply an entered (e.g., manually entered) configuration to the configurable set of interconnect data links 480.

As was the case with the portion 300 of Figure 3, in one example implementation of 400, the port groups 412 within a PIC 410 include, respectively, 18 ports - (1) Port 0; (2) Ports 2,4,6,8,10,12,14,16; (3) Ports 3,5,7,9,11,13,15,17; and (4) Port 1. The PIMs 414 within a PIC 410 include, two eight lane PIMs (associated with Port 0 and Port 1), each terminating a 8x112 Gbps link 130, and two eight-by 112 Gbps PIMs (associated with Ports 2,4,6,8,10,12,14,16 and Ports 3,5,7,9,11,13,15,17), each terminating eight 112 Gbps links 430. Further, one or more EMG modules 422 is linked, via configurable interconnect data links 480, to one or more PFEs 424. In the example 400 shown, more than one EMG modules 422 may be linked, via configurable interconnect data links 480, to a single PFE 424, and/or one EMG module 422 may be linked, via configurable interconnect data links 480, to more than one PFE 424. In one specific implementation, each EMG module 342 is a so called PMP module from Juniper Networks, Inc., of Sunnyvale, CA, which performs port group IO (PGIO), Media Access Control Security (MACSec), and packet test on chip (PTOC), though these functions are not necessary. The configurable interconnect data links 480 may be SERDES (SERializer/DESerializer) links.

As can be appreciated from the foregoing, an example EMG-PFE group 420 includes: (1) a plurality of Ethernet MAC group (EMG) modules 422, each servicing a group of one or more Ethernet ports 430; (2) a plurality of packet forwarding engines (PFEs) 424, each adapted to process packets received from one or more of the EMG modules 422; and (3) a set of configurable interconnect data links 480 between the plurality of EMG modules 422 and the plurality of PFEs 424, wherein at least one of the EMG modules 422 can transmit packets to a selectable one of the plurality of PFEs 424. A configuration module 490 may be used to apply a given configuration to the to the configurable internet data links 480. The configuration module 490 may be a user-interface module adapted to receive a configuration configuring an association of each of the plurality of EMG modules 422 with each of the plurality of PFEs 424 to define a set of "active" or "operable" or "online" interconnect data links within the set of interconnect data links 480.

The configuration of the set of interconnect data links 480 can be changed over time. For example, in some example implementations, the configuration module 490 is adapted to receive a second configuration configuring a second association of each of the plurality of EMG modules 422 with each of the plurality of PFEs 424, wherein the second association is different from the first association.

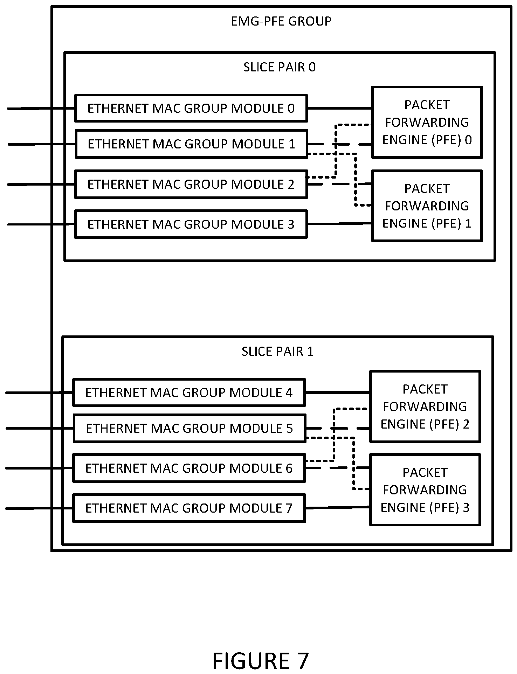

In some example implementations, at least one of the EMG modules 422 can transmit packets to only one of the plurality of PFEs 424, as will be illustrated later with reference to Figure 7. That is, one or more of the EMG modules 422 may be hardwired, with a static interconnect data link, with one of the PFEs 424.

### § 4.3 EXAMPLE METHODS

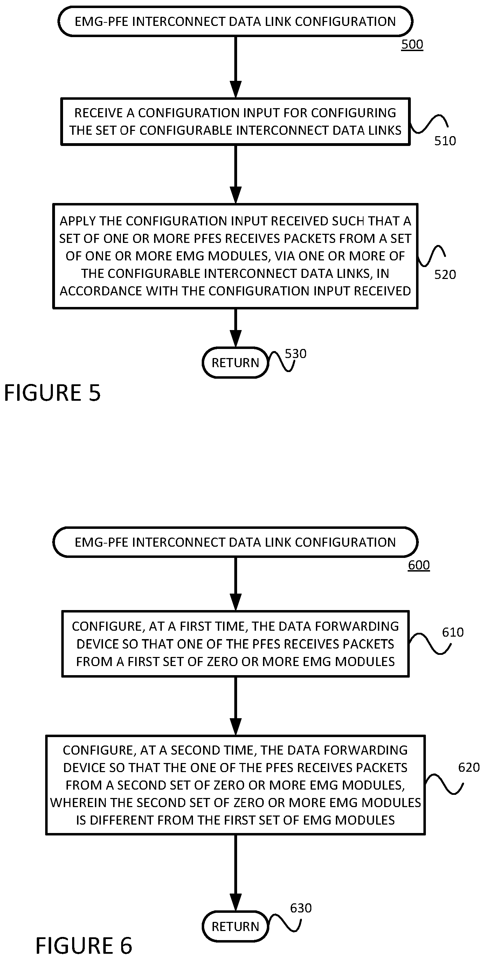

Figures 5 and 6 are flow diagrams of example methods 500 and 600, respectively, for configuring EMG-PFE interconnect data links to permit a more flexible allocation of PFEs to Ethernet MAC groups. The example methods 500 and 600 of Figures 5 and 6, respectively, may be used in a data forwarding device including (1) a plurality of Ethernet MAC group (EMG) modules, each servicing a group of one or more Ethernet ports (Recall, e.g., 422 of Figure 4.), (2) a plurality of packet forwarding engines (PFEs) (Recall, e.g., 424 of Figure 4.), each adapted to process packets received from one or more of the EMG modules, and (3) a set of configurable interconnect data links (Recall, e.g., 480 of Figure 4.) between at least one of the EMGs and at least one of the PFEs.

The example method 500 of Figure 5 receives a configuration input for configuring the set of configurable interconnect data links. (Block 510). This configuration input may manually input, automatically generated and input, etc. The configuration input may be sourced from a control component of a router or switch, and provided to the forwarding component of the router or switch. Alternatively, the configuration may be sourced from a remote device (outside of data forwarding device) and received, e.g., by a component of the data forwarding device. The example method 500 then applies the configuration input received such that a set of one or more PFEs receives packets from a set of one or more EMG modules, via one or more of the configurable interconnect data links, in accordance with the configuration input received (Block 520), before the example method 500 is left (Return Node 530).

The example method 600 of Figure 6 configures, at a first time, the data forwarding device so that one of the PFEs receives packets from a first set of zero or more EMG modules (Block 610), and configures, at a second time, the data forwarding device so that the one of the PFEs receives packets from a second set of zero or more EMG modules, wherein the second set of zero or more EMG modules is different from the first set of EMG modules (Block 620), before the example method 600 is left (Return Node 630).

The configurations applied in the example method 500 and/or example method 600 may be subject to a manual or automatic check to confirm that a PFE can accommodate traffic from one or more connected EMG modules. For example, assume that a configuration is desired in which the first set of zero or more EMG modules terminate one or more links having a first total bandwidth. A check should be performed to confirm that a throughput rate of the one of the PFEs is greater than the first total bandwidth. If the check is performed automatically, and the check is violated, the desired configuration can be disabled, and/or a warning may be provided to a user via a user interface. Alternatively, or in addition, a configuration can be automatically determined, subject to the bandwidth constraints of the PFEs and any other constraints (e.g., can't exceed a predetermined number of (e.g., eight) ports per EMG module and/or PFE, can't exceed a predetermined bandwidth (e.g., 800 G) per EMG module and/or PFE, can only have 2ⁿ ports per EMG module and/or PFE, etc.) based on what types of links are plugged into the device.

It is possible to configure the data forwarding device so that one of the PFEs receives packets from a set of at least two EMG modules. In such a configuration, different EMG modules should use different time slots on a time-division multiplexed line. For example, if a PFE is to service both a first EMG module having packets from eight (8) Ethernet MACs and a second EMG module having packets from another eight (8) Ethernet MACs, there should be at least sixteen (16) time slots allocated between the two EMG modules. Alternatively, or in addition, it is possible to configure the data forwarding device so that one of the EMG modules transmits packets to a set of at least two PFEs (e.g., where a given MAC in the group is sent to only one PFE).

### § 4.4 ALTERNATIVES, REFINEMENTS, AND/OR EXTENSIONS

### § 4.4.1 EXAMPLE EMG-PFE GROUPS

In some example implementations, at least one of the EMG modules 422 can transmit packets to only one of the plurality of PFEs 424. That is, one or more of the EMG modules 422 may be hardwired, with a static interconnect data link, with one of the PFEs 424. For example, referring to the specific example embodiment of Figure 7, EMG module 0 can transmit packets only to PFE 0, EMG module 3 can transmit packets only to PFE 1, EMG module 4 can transmit packets only to PFE 2, and EMG module 7 can transmit packets only to PFE 3.

In some example implementations, the set of active interconnect data links within the set of interconnect data links 480 permit one of the EMG modules 422 to transmit packets to at least two PFEs 424. In some example implementations, the set of active interconnect data links within the set of interconnect data links 480 permit one of the PFEs 424 to receive packets from at least two EMG modules 422.

In some example implementations, the plurality of EMG modules 422 is greater in number than the plurality of PFEs 424. For example, referring to the specific example embodiment of Figure 7, eight (8) EMG modules and four (4) PFEs are provided.

In some example implementations, at least two of the plurality of PFEs 424 are provided as slices sharing on-chip memory. For example, referring to the specific example embodiment of Figure 7, PFE 0 and PFE 1 belong to slice pair 0, and PFE 2 and PFE 3 belong to slice pair 1. In some example implementations, each of the plurality of PFEs 424 include a lookup sub-system, and wherein the lookup sub-system performs at least some of (A) packet processing, (B) route lookup, (C) label lookup, (D) firewall, and/or (E) packet classification.

In some example implementations, a first one of the plurality of EMG modules 422 is associated with a first set of at least one first interface module 414 providing a first number of lanes of data (e.g., one lane) and a second one of the plurality of EMG modules 422 is associated with a second set of at least one second interface module 414 providing a second number (that is greater than the first number) of lanes of data (e.g., eight lanes). In some example implementations, the first set of at least one first interface module 414 is associated with, and services, a first number of at least one port 412, and the second set of a least one second interface module 414 is associated with, and services, a second number of at least one port 412.

In some example implementations, the configuration configuring an association of each of the plurality of EMG modules 422 with each of the plurality of PFEs 424 to define a set of active interconnect data links within the set of interconnect data links 480 is one of a plurality of configuration modes, wherein in a first of the plurality of configuration modes, each PFE 424 services the same number of EMG modules 422, and wherein in a second of the plurality of configuration modes, a first PFE 424 services a first number of EMG modules 422, and a second PFE 424 services a second number of EMG modules 422, different from the first number. For example, referring to the specific example embodiment of Figure 7, in a first configuration each of PFE 0 and PFE 1 service two EMG modules. For example, PFE 0 can service EMG modules 0 and 1 (or EMG modules 0 and 2) and PFE 1 can service EMG modules 2 and 3 (or EMG modules 1 and 3). In a second configuration PFE 0 can service EMG module 0 (or EMG modules 0, 1, and 2) and PFE 1 can service EMG modules 1, 2, and 3 (or EMG module 3).

In the specific example embodiment of Figure 7, in each of slice pair 0 and slice pair 1, (i) the plurality of plurality of EMG modules consists of four (4) EMG modules (0-3 or 4-7), and (ii) the plurality of PFEs consists of two (2) PFEs (0 and 1, or 2 and 3). In a first of a plurality of configuration modes, each PFE services two EMG modules, while in a second of the plurality of configuration modes, a first of the two PFEs services one (1) EMG module, and a second of the two PFEs services three (3) EMG modules. Other configurations are possible. For example, one PFE of a slice pair can service four (4) EMG modules, with the other PFE of the slice pair servicing no EMG modules. Still other configurations and permutations of associating a first number (M) of EMG module(s) with a second number (N) of PFE(s) is possible, where M and N may be, but need not be, different. Various example configures are described in the Appendix.

### § 4.4.2 CONFIGURATION USER INTERFACE EXAMPLES

Three alternative ways to configure an example EMG-PFE group are now described in §§ 4.4.2.1- 4.4.2.3 below.

### § 4.4.2.1 CONFIGURATION USER INTERFACE USING MAC SHARING AT PFE LEVEL

In some example implementations, a user interface module allows each of at least some of the plurality of PFEs to enable or disable its being shared by more than one EMG module. In the context of the Junos operating system from Juniper Networks, Inc., this may be accomplished with the following command line entered via a command line interface (CLI):
set chassis fpc <slot> pfe <instance> forwarding-mode mac-sharing

This is a PFE level CLI configuration to enable/disable EMG module sharing. For example, in one implementation, EMG module sharing is disabled by default. Consider the following four possible modes in the specific example implementation of Figure 7. In a default mode (called "mode 2" in this description), there is no EMG module sharing. Referring to slice pair 0 of Figure 7, under default mode 2, PFE 0 services EMG modules 0 and 1 (solid and dashed lines), and PFE 1 services EMG modules 2 and 3 solid and dashed lines). Similarly, for slice pair 1, under default mode 2, PFE 2 services EMG modules 4 and 5, and PFE 3 services EMG modules 6 and 7. In a "swapped" mode (called "mode 0" in this description), PFE 0 services EMG modules 0 and 2 (solid and dotted lines), and PFE 1 services EMG modules 1 and 3 (solid and dotted lines). Similarly, for slice pair 1, under "swapped" mode 0, PFE 2 services EMG modules 4 and 6, and PFE 3 services EMG modules 5 and 7. In a 1+3 mode (called "mode 1" in this description), PFE 0 services EMG module 0 (solid line), and PFE 1 services EMG modules 1, 2 and 3 (solid, dotted and dashed lines). Similarly, for slice pair 1, under 1+3 mode 1, PFE 2 services EMG module 4, and PFE 3 services EMG modules 5, 6 and 7. Finally, in a 3+1 mode (called "mode 3" in this description), PFE 0 services EMG modules 0, 1 and 2 (solid, dashed and dotted lines), and PFE 1 services EMG module 3 (solid line). Similarly, for slice pair 1, under 3+1 mode 3, PFE 2 services EMG modules 4, 5 and 6, and PFE 3 services EMG module 7.

This implementation of configuration fits well with the PIC and port level port profile configuration in the JUNOS operating system from Juniper Networks, Inc. It fits well for fixed platforms and Modular Port Concentrators (MPCs) with a single XT or multiple XT chips (which include EMG modules and PFE slices, which may be provided on a line card) from Juniper Networks, Inc.

Configuration doesn't need to exist for both the PFEs in a slice-pair. This is because enabling EMG module sharing on one PFE in a slice-pair affects the other PFE in the slice-pair. The MAC sharing mode (Mode 0, 1, 2, or 3) for the two PFEs in a slice-pair is based on the share enable/disable configurations. That is, if neither PFE has EMG module sharing enabled, mode 2 (2+2 default) is provided, if only PFE 0 has EMG module sharing enabled, mode 1 (1+3) is provided, if only PFE 1 has EMG module sharing enabled, mode 3 (3+1) is provided, and if both PFEs have EMG module sharing enabled, mode 0 (2+2 swapped) is provided.

In this example implementation, automatic IFD deletion/recreation may occur when MAC-sharing CLI knob is changed. More specifically, all the IFDs hosted by the two PFEs in the affected slice-pair may be deleted and recreated. IFD to PFE mapping can be different after IFD recreation.

In one example implementation, configuration change will only impact the two PFEs in a slice-pair. That is, the mode or configuration in one slice pair can be different from that in another slice pair.

There is no dependency on the number of PICs per FPC, or PIC to PFE mapping.

MAC sharing at PFE level configuration is a good option that fits well with many scenarios.

### § 4.4.2.2 CONFIGURATION USER INTERFACE USING MAC SHARING AT PIC LEVEL

In some example implementations, in the context of the Junos operating system from Juniper Networks, Inc., configuration using EMG module sharing at the PIC level may be accomplished with the following command line entered via the command line interface (CLI):
set chassis fpc <slot> pic <slot> forwarding-mode mac-sharing-mode <0|1|2|3>

That is, a CLI configuration is provided to enable/disable EMG module sharing at the PIC level. In one example implementation, EMG module sharing on a PIC is disabled by default. Using similar terminology as above, we have Mode 0 (2+2 swapped), Mode 1 (1+3), Mode 2 (2+2 default), and Mode 3 (3+1). An optional EMG module sharing mode is added to the existing CLI knob forwarding-mode. This type of PIC-level configuration fits well with the PIC and port level port profile configuration. It also fits well for fixed platforms and MPCs with a single XT or multiple XTs.

In one example implementation, PIC offline/online is automatically selected when an EMG module sharing mode CLI knob is changed. All the IFDs hosted by the PIC will be deleted and recreated. IFD to PFE mapping can be different after the PIC is online.

Configuration change on a PIC only impacts the affected PIC. Consequently, configuration change on a PIC affects only two PFEs. There is no service impact for the other PIC (i.e., for the other two PFEs).

Unfortunately, however, if a PIC is mapped to more than one slice-pair, the configuration change will affect more than two PFEs, However, overall, this is a good option if it can be assumed that a PIC is at slice-pair level.

### § 4.4.2.3 CONFIGURATION USER INTERFACE USING MAC SHARING AT FLEXIBLE PIC (PHYSICAL INTERFACE CARD) CONCENTRATOR (FPC) LEVEL

In some example implementations, in the context of the Junos operating system from Juniper Networks, Inc., configuration using MAC sharing at the FPC level may be accomplished with the following command line entered via the command line interface (CLI):
set chassis fpc <slot> forwarding-mode mac-sharing-mode <0|1|2|3>

An FPC level CLI configuration is provided to enable/disable EMG module sharing. In one example implementation, EMG module sharing is disabled by default. Using similar terminology as above, we have Mode 0 (2+2 swapped), Mode 1 (1+3), Mode 2 (2+2 default), and Mode 3 (3+1). The CLI knob forwarding-mode doesn't exist at FPC level of JUNOS now and would need to be added. Configuring EMG module sharing at the FPC level fits well with the PIC and port level port profile configuration.

Unfortunately, however, configurating EMG module sharing at the FPC level has a number of disadvantages. First, it forces the EMG module sharing mode to be the same for the both the slice-pairs, which reduces flexibility. It doesn't fit well for fixed platforms and MPCs with a single XT or multiple XTs. Further, PIC offline/online is automatically changed for all the PICs when the EMG module sharing mode CLI knob is changed. Further, all the IFDs hosted by the all the PICs will be deleted and recreated. IFD to PFE mapping can be different after the PIC is online. All the IFDs hosted by the MPC will be impacted. Therefore, this is an undesirable option for fixed platforms with a single XT, and is not a preferred option.

### § 4.4.3 DISPLAYING PFE MAPPING AT PIC PORT LEVEL

In some example implementations, the user-interface module is adapted to display an association of ports and PFEs (and possibly other information) based on the configuration configuring an association of each of the plurality of EMG modules with each of the plurality of PFEs. The display of such information may be invoked with a:
user@router> show chassis pic fpc-slot 1 pick-slot 1 ...

command. The following illustrates the display of such information, as well we additional information (e.g., capable port speeds in this example).

| **PORT** | **PFE** | **CAPABLE PORT SPEEDS** |
|---|---|---|
| 0 | 1 | <supported speeds> |
| 1 | 1 | <supported speeds> |
| 2 | 0 or 1 | <supported speeds> |
| 3 | 0 or 1 | <supported speeds> |
| 4 | 0 or 1 | <supported speeds> |
| 5 | 0 or 1 | <supported speeds> |
| 6 | 0 or 1 | <supported speeds> |
| 7 | 0 or 1 | <supported speeds> |
| 8 | 0 or 1 | <supported speeds> |
| 9 | 0 or 1 | <supported speeds> |
| 10 | 0 or 1 | <supported speeds> |
| 11 | 0 or 1 | <supported speeds> |
| 12 | 0 or 1 | <supported speeds> |
| 13 | 0 or 1 | <supported speeds> |
| 14 | 0 or 1 | <supported speeds> |
| 15 | 0 or 1 | <supported speeds> |
| 16 | 0 or 1 | <supported speeds> |
| 17 | 0 or 1 | <supported speeds> |

Note in this example that each of ports 0 and 1 is fixed or static. In one example implementation, the PFE instance displayed will change dynamically, based on the EMG module sharing mode (discussed above).

### § 4.4.4 DISPLAYING PFE MAPPING AT IFD LEVEL

In some example implementations, the user-interface module is adapted to display, in response to a query to show information about a given interface, any of the plurality of PFEs associated with the given interface based on the configuration configuring an association of each of the plurality of EMG modules with each of the plurality of PFEs. For example, the following command line entry:
user@router> show interfaces et-5/0/1
may cause the display of the following information:

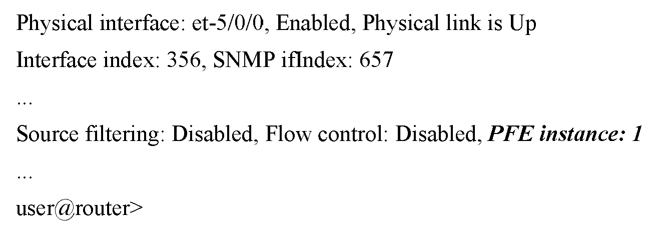

Thus, an existing CLI show command is extended to display the PFE instance.

### § 4.5 EXAMPLE ROUTERS AND FORWARDING DEVICES IN WHICH THE EMG MODULES, CONFIGURABLE INTERCONNECT DATA LINKS, AND PFEs MAY OPERATE

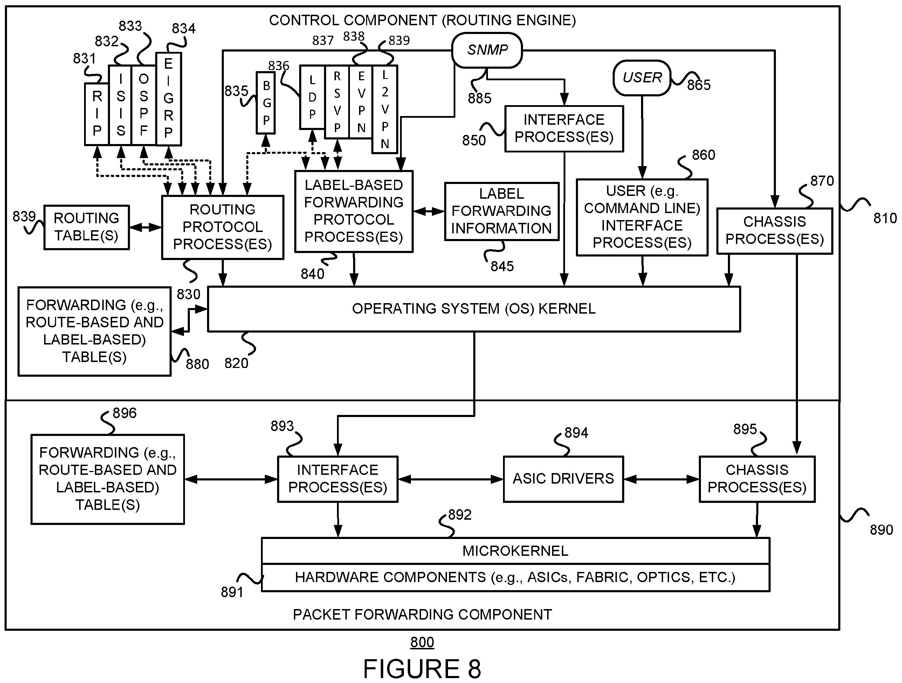

Figure 8 illustrates an example router which may include forwarding components and user interface/configuration components such as those described with reference to Figure 4. As discussed above, some example routers 800 include a control component (e.g., routing engine) 810 and a packet forwarding component (e.g., a packet forwarding engine) 890.

The control component 810 may include an operating system (OS) kernel 820, routing protocol process(es) 830, label-based forwarding protocol process(es) 840, interface process(es) 850, user interface (e.g., command line interface (CLI)) process(es) 860, and chassis process(es) 870, and may store routing table(s) 839, label forwarding information 845, and forwarding (e.g., route-based and/or label-based) table(s) 880. As shown, the routing protocol process(es) 830 may support routing protocols such as the routing information protocol ("RIP") 831, the intermediate system-to-intermediate system protocol ("IS-IS") 832, the open shortest path first protocol ("OSPF") 833, the enhanced interior gateway routing protocol ("EIGRP") 834 and the border gateway protocol ("BGP") 835, and the label-based forwarding protocol process(es) 840 may support protocols such as BGP 835, the label distribution protocol ("LDP") 836, the resource reservation protocol ("RSVP") 837, EVPN 838 and L2VPN 839, segment routing (SR) (not shown), multi-protocol label switching (MPLS) (not shown), etc. One or more components (not shown) may permit a user 865 to interact with the user interface process(es) 860. Similarly, one or more components (not shown) may permit an outside device to interact with one or more of the router protocol process(es) 830, the label-based forwarding protocol process(es) 840, the interface process(es) 850, and/or the chassis process(es) 870, via SNMP 885, and such processes may send information to an outside device via SNMP 885.

The packet forwarding component 890 may include a microkernel 892 over hardware components (e.g., ASICs, switch fabric, optics, etc.) 891, interface process(es) 893, ASIC drivers 894, chassis process(es) 895 and forwarding (e.g., route-based and/or label-based) table(s) 896.

In the example router 800 of Figure 8, the control component 810 handles tasks such as performing routing protocols, performing label-based forwarding protocols, control packet processing, etc., which frees the packet forwarding component 890 to forward received packets quickly. That is, received control packets (e.g., routing protocol packets and/or label-based forwarding protocol packets) are not fully processed on the packet forwarding component 890 itself, but are passed to the control component 810, thereby reducing the amount of work that the packet forwarding component 890 has to do and freeing it to process packets to be forwarded efficiently. Thus, the control component 810 is primarily responsible for running routing protocols and/or label-based forwarding protocols, maintaining the routing tables and/or label forwarding information, sending forwarding table updates to the packet forwarding component 890, and performing system management. The example control component 810 may handle routing protocol packets, provide a management interface, provide configuration management, perform accounting, and provide alarms. The processes 830, 840, 850, 860 and 870 may be modular, and may interact with the OS kernel 820. That is, nearly all of the control processes communicate directly with the OS kernel 820. Using modular software that cleanly separates processes from each other isolates problems of a given process so that such problems do not impact other processes that may be running. Additionally, using modular software facilitates easier scaling.

Still referring to Figure 8, the example OS kernel 820 may incorporate an application programming interface ("API") system for external program calls and scripting capabilities. The control component 810 may be based on an Intel PCI platform running the OS from flash memory, with an alternate copy stored on the router's hard disk. The OS kernel 820 is layered on the Intel PCI platform and establishes communication between the Intel PCI platform and processes of the control component 810. The OS kernel 820 also ensures that the forwarding tables 896 in use by the packet forwarding component 890 are in sync with those 880 in the control component 810. Thus, in addition to providing the underlying infrastructure to control component 810 software processes, the OS kernel 820 also provides a link between the control component 810 and the packet forwarding component 890.

Referring to the routing protocol process(es) 830 of Figure 8, this process(es) 830 provides routing and routing control functions within the platform. In this example, the RIP 831, ISIS 832, OSPF 833 and EIGRP 834 (and BGP 835) protocols are provided. Naturally, other routing protocols may be provided in addition, or alternatively. Similarly, the label-based forwarding protocol process(es) 840 provides label forwarding and label control functions. In this example, the LDP 836, RSVP 837, EVPN 838 and L2VPN 839 (and BGP 835) protocols are provided. Naturally, other label-based forwarding protocols (e.g., MPLS, SR, etc.) may be provided in addition, or alternatively. In the example router 800, the routing table(s) 839 is produced by the routing protocol process(es) 830, while the label forwarding information 845 is produced by the label-based forwarding protocol process(es) 840.

Still referring to Figure 8, the interface process(es) 850 performs configuration of the physical interfaces and encapsulation.

The example control component 810 may provide several ways to manage the router. For example, it 810 may provide a user interface process(es) 860 which allows a system operator 865 to interact with the system through configuration, modifications, and monitoring. The SNMP 885 allows SNMP-capable systems to communicate with the router platform. This also allows the platform to provide necessary SNMP information to external agents. For example, the SNMP 885 may permit management of the system from a network management station running software, such as Hewlett-Packard's Network Node Manager ("HP-NNM"), through a framework, such as Hewlett-Packard's OpenView. Accounting of packets (generally referred to as traffic statistics) may be performed by the control component 810, thereby avoiding slowing traffic forwarding by the packet forwarding component 890.

Although not shown, the example router 800 may provide for out-of-band management, RS-232 DB9 ports for serial console and remote management access, and tertiary storage using a removable PC card. Further, although not shown, a craft interface positioned on the front of the chassis provides an external view into the internal workings of the router. It can be used as a troubleshooting tool, a monitoring tool, or both. The craft interface may include LED indicators, alarm indicators, control component ports, and/or a display screen. Finally, the craft interface may provide interaction with a command line interface ("CLI") 860 via a console port, an auxiliary port, and/or a management Ethernet port.

The packet forwarding component 890 is responsible for properly outputting received packets as quickly as possible. If there is no entry in the forwarding table for a given destination or a given label and the packet forwarding component 890 cannot perform forwarding by itself, it 890 may send the packets bound for that unknown destination off to the control component 810 for processing. The example packet forwarding component 890 is designed to perform Layer 2 and Layer 3 switching, route lookups, and rapid packet forwarding.

As shown in Figure 8, the example packet forwarding component 890 has an embedded microkernel 892 over hardware components 891, interface process(es) 893, ASIC drivers 894, and chassis process(es) 895, and stores a forwarding (e.g., route-based and/or label-based) table(s) 896. The microkernel 892 interacts with the interface process(es) 893 and the chassis process(es) 895 to monitor and control these functions. The interface process(es) 892 has direct communication with the OS kernel 820 of the control component 810. This communication includes forwarding exception packets and control packets to the control component 810, receiving packets to be forwarded, receiving forwarding table updates, providing information about the health of the packet forwarding component 890 to the control component 810, and permitting configuration of the interfaces from the user interface (e.g., CLI) process(es) 860 of the control component 810. The stored forwarding table(s) 896 is static until a new one is received from the control component 810. The interface process(es) 893 uses the forwarding table(s) 896 to look up next-hop information. The interface process(es) 893 also has direct communication with the distributed ASICs. Finally, the chassis process(es) 895 may communicate directly with the microkernel 892 and with the ASIC drivers 894.

Referring to both Figures 4 and 8, the example EMG-PFE groups 420 may be implemented as some of the hardware components 891. The configurable interconnect data links 480, programmed via configuration module 890, may be implemented on one or more of the interface processes 850, the user interface processes 860, OS Kernal 845, hardware components 891, interface processes 893, and/or ASIC drivers 894.

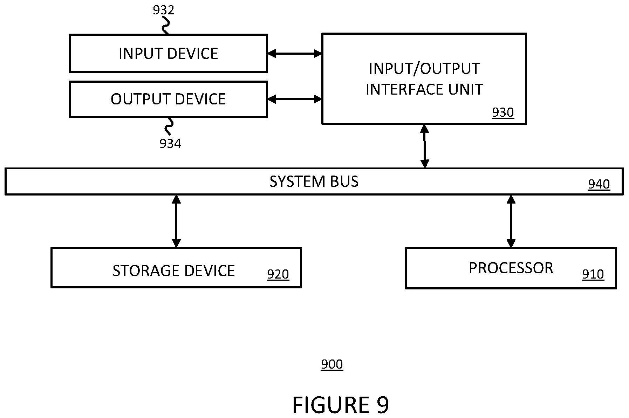

Although example embodiments consistent with the present description may be implemented on the example routers of Figure 1, 2, or 8, embodiments consistent with the present description may be implemented on communications network nodes (e.g., routers, switches, etc.) having different architectures. More generally, embodiments consistent with the present description may be implemented on an example system 900 as illustrated on Figure 9.

Figure 9 is a block diagram of an exemplary machine 900 that may perform one or more of the processes described, and/or store information used and/or generated by such processes. The exemplary machine 900 includes one or more processors 910, one or more input/output interface units 930, one or more storage devices 920, and one or more system buses and/or networks 940 for facilitating the communication of information among the coupled elements. One or more input devices 932 and one or more output devices 934 may be coupled with the one or more input/output interfaces 930. The one or more processors 910 may execute machine-executable instructions (e.g., C or C++ running on the Linux operating system widely available from a number of vendors) to perform one or more aspects of the present description. At least a portion of the machine executable instructions may be stored (temporarily or more permanently) on the one or more storage devices 920 and/or may be received from an external source via one or more input interface units 930. The machine executable instructions may be stored as various software modules, each module performing one or more operations. Functional software modules are examples of components of the present description.

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

In some embodiments consistent with the present description, the processors 910 may be one or more microprocessors and/or ASICs. The bus 940 may include a system bus and/or data links. The storage devices 920 may include system memory, such as read only memory (ROM) and/or random access memory (RAM). The storage devices 920 may also include a hard disk drive for reading from and writing to a hard disk, a magnetic disk drive for reading from or writing to a (e.g., removable) magnetic disk, an optical disk drive for reading from or writing to a removable (magneto-) optical disk such as a compact disk or other (magneto-) optical media, or solid-state non-volatile storage.

Some example embodiments consistent with the present description may also be provided as a machine-readable medium for storing the machine-executable instructions. The machine-readable medium may be non-transitory and may include, but is not limited to, flash memory, optical disks, CD-ROMs, DVD ROMs, RAMs, EPROMs, EEPROMs, magnetic or optical cards or any other type of machine-readable media suitable for storing electronic instructions. For example, example embodiments consistent with the present description may be downloaded as a computer program which may be transferred from a remote computer (e.g., a server) to a requesting computer (e.g., a client) by way of a communication link (e.g., a modem or network connection) and stored on a non-transitory storage medium. The machine-readable medium may also be referred to as a processor-readable medium.

Example embodiments consistent with the present description (or components or modules thereof) might be implemented in hardware, such as one or more field programmable gate arrays ("FPGA"s), one or more integrated circuits such as ASICs, one or more network processors, etc. Alternatively, or in addition, embodiments consistent with the present description (or components or modules thereof) might be implemented as stored program instructions executed by a processor. Such hardware and/or software might be provided in an addressed data (e.g., packet, cell, etc.) forwarding device (e.g., a switch, a router, etc.), or any device that has computing and/or networking capabilities.

### § 4.6 CONCLUSIONS

Example embodiments consistent with the present description allow a configurable set of Ethernet MACs to be shared (via EMG modules) with a PFE (and/or allow a configurable set of PFEs to service one Ethernet MAC). Advantageously, the Ethernet MAC-to-PFE association(s) can be made dynamically without affecting the current active Ethernet MACs and ports. This provides a way to effectively utilize the available hardware resources in a line card. With this, the network operators and administrator can have a high port scale configuration with different PFE roles in a line card.

Thus, from one perspective, there has now been described a data forwarding device includes a plurality of Ethernet MAC group (EMG) modules, each servicing a group of one or more Ethernet ports, a plurality of packet forwarding engines (PFEs), each configured adapted to process packets received from one or more of the EMG modules, and a set of configurable interconnect data links between at least one of the EMGs and at least one of the PFEs. A configuration input for configuring the set of configurable interconnect data links is received (e.g., from user interface), and applied such that a set of one or more PFEs receives packets from a set of one or more EMG modules, via one or more of the configurable interconnect data links, in accordance with the configuration input received.

### § 4.7 CLAUSES

Further examples of feature combinations taught by the present disclosure are set out in the following numbered clauses:
1. For use in a data forwarding device including:
   - a plurality of Ethernet MAC group (EMG) modules, each servicing a group of one or more Ethernet ports, and
   - a plurality of packet forwarding engines (PFEs), each adapted to process packets received from one or more of the EMG modules,
   a computer-implemented method comprising:
   a) configuring, at a first time, the data forwarding device so that one of the PFEs receives packets from a first set of zero or more EMG modules; and
   b) configuring, at a second time, the data forwarding device so that the one of the PFEs receives packets from a second set of zero or more EMG modules, wherein the second set of zero or more EMG modules is different from the first set of EMG modules.
2. The computer-implemented method of clause 1, wherein the first set of zero or more EMG modules terminate one or more links having a first total bandwidth,
   wherein a throughput rate of the one of the PFEs is greater than the first total bandwidth,
   wherein the second set of zero or more EMG modules terminate one or more links having a second total bandwidth, and
   wherein the throughput rate of the one of the PFEs is greater than the second total bandwidth.
3. The computer-implemented method of clause 1 wherein, at a first time, the data forwarding device is configured so that one of the PFEs receives packets from a first set of at least two EMG modules.
4. The computer-implemented method of clause 1, wherein the plurality of EMG modules, and the plurality of PFEs are provided on a single application specific integrated circuit (ASIC) chip, and
   wherein the plurality of EMG modules is greater in number than the plurality of PFEs.
5. A data forwarding device including:
   a) a plurality of Ethernet MAC group (EMG) modules, each servicing a group of one or more Ethernet ports;
   b) a plurality of packet forwarding engines (PFEs), each adapted to process packets received from one or more of the EMG modules;
   c) a set of interconnect data links between the plurality of EMG modules and the plurality of PFEs, wherein at least one of the EMG modules can transmit packets to a selectable one of at least two of the plurality of PFEs; and
   d) a user-interface module adapted to receive a configuration configuring an association of each of the plurality of EMG modules with each of the plurality of PFEs to define a set of active interconnect data links within the set of interconnect data links.
6. The data forwarding device of clause 5, wherein the user-interface module is adapted to receive a second configuration configuring a second association of each of the plurality of EMG modules with each of the plurality of PFEs, wherein the second association is different from the first association.
7. The data forwarding device of clause 5, wherein at least one of the EMG modules can transmit packets to only one of the plurality of PFEs.
8. The data forwarding device of clause 5, wherein the user interface module allows each of at least some of the plurality of PFEs to be configured to enable or disable its being shared by more than one EMG module.
9. The data forwarding device of clause 8, wherein the enable or disable sharing configuration of a first PFE affects whether or not sharing of a second PFE is enabled or disabled.
10. The data forwarding device of clause 5, wherein the set of active interconnect data links within the set of interconnect data links permit one of the EMG modules to transmit packets to at least two PFEs.
11. The data forwarding device of clause 5, wherein the set of active interconnect data links within the set of interconnect data links permit one of the PFEs to receive packets from at least two EMG modules.
12. The data forwarding device of clause 5, wherein the plurality of EMG modules is greater in number than the plurality of PFEs, and
   wherein at least two of the plurality of PFEs are provided as slices sharing on-chip memory.
13. The data forwarding device of clause 5, wherein each of the plurality of PFEs include a lookup sub-system, and wherein the lookup sub-system performs at least some of (A) packet processing, (B) route lookup, (C) label lookup, (D) firewall, and/or (E) packet classification.
14. The data forwarding device of clause 5 wherein a first one of the plurality of EMG modules is associated with a first set of at least one first interface module providing a first number of lanes of data,
   wherein a second one of the plurality of EMG modules is associated with a second set of at least one second interface module providing a second number of lanes of data, and
   wherein the second number of lanes of data is greater than the first number of lanes of data.
15. The data forwarding device of clause 14, wherein the first set of at least one first interface module is associated with, and services, a first number of at least one port, and
   wherein the second set of a least one second interface module is associated with, and services, a second number of at least one port.
16. The data forwarding device of clause 5, wherein the configuration configuring an association of each of the plurality of EMG modules with each of the plurality of PFEs to define a set of active interconnect data links within the set of interconnect data links is one of a plurality of configuration modes,
   wherein in a first of the plurality of configuration modes, each PFE services the same number of EMG modules, and
   wherein in a second of the plurality of configuration modes, a first PFE services a first number of EMG modules, and a second PFE services a second number of EMG modules, different from the first number.
17. The data forwarding device of clause 5, wherein the plurality of plurality of EMG modules consists of four (4) EMG modules,
   wherein the plurality of PFEs consists of two (2) PFEs, and
   wherein the configuration configuring an association of each of the plurality of EMG modules with each of the plurality of PFEs to define a set of active interconnect data links within the set of interconnect data links is one of a plurality of configuration modes,
   wherein in a first of the plurality of configuration modes, each PFE services two EMG modules, and
   wherein in a second of the plurality of configuration modes, a first of the two PFEs services one (1) EMG modules, and a second of the two PFEs services three (3) EMG modules.
18. The data forwarding device of clause 5, wherein the user-interface module is adapted to display an association of ports and PFEs based on the configuration configuring an association of each of the plurality of EMG modules with each of the plurality of PFEs.
19. The data forwarding device of clause 5, wherein the user-interface module is adapted to display, in response to a query to show information about a given interface, any of the plurality of PFEs associated with the given interface based on the configuration configuring an association of each of the plurality of EMG modules with each of the plurality of PFEs.
20. For use in a data forwarding device including:
   - a plurality of Ethernet MAC group (EMG) modules, each servicing a group of one or more Ethernet ports,
   - a plurality of packet forwarding engines (PFEs), each configured adapted to process packets received from one or more of the EMG modules, and
   - a set of configurable interconnect data links between at least one of the EMGs and at least one of the PFEs,
   a computer-implemented method comprising:
   a) receiving a configuration input for configuring the set of configurable interconnect data links; and
   b) applying the configuration input received such that a set of one or more PFEs receives packets from a set of one or more EMG modules, via one or more of the configurable interconnect data links, in accordance with the configuration input received.

### APPENDIX

### LC3200 PIC Mapping for MX10008/MX10004

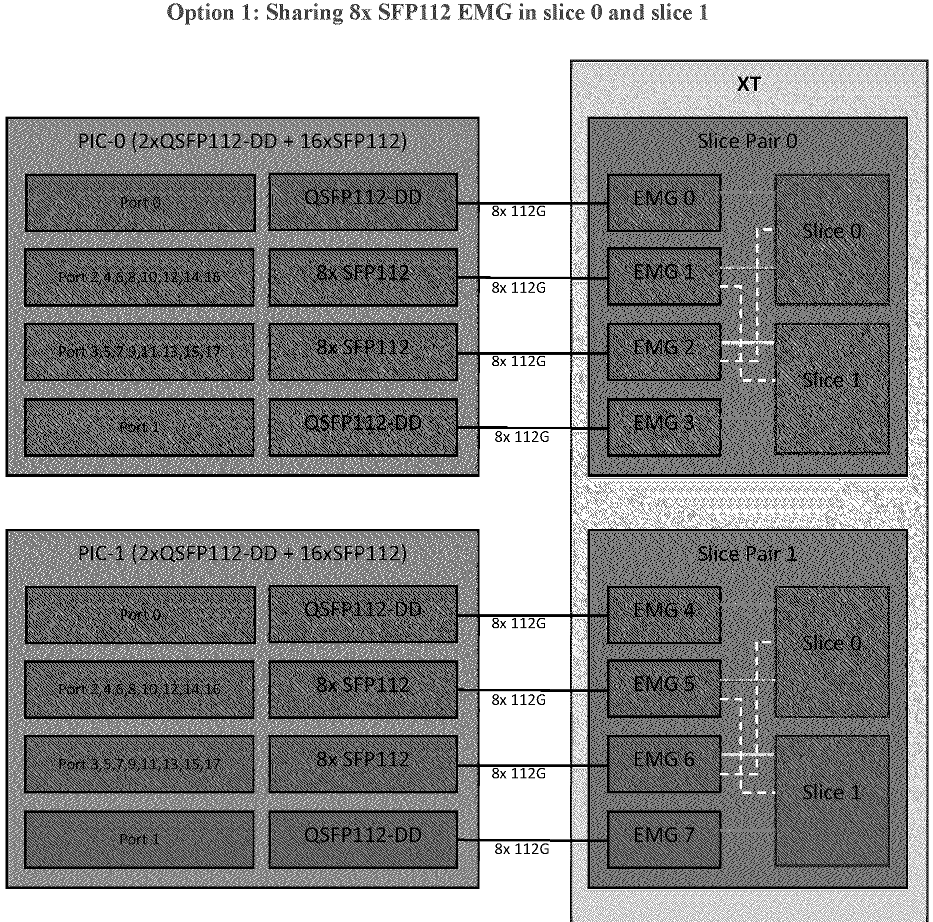

### Summary:

| | | |
|---|---|---|
| **Without EMG Sharing** | **With EMG Sharing** | |
| • All the even PIC ports will always be mapped to even PFEs. | • 2+2 swapped mode | |
| | • 1+3 mode | |
| • All the odd PIC ports will always be mapped to odd PFEs. | • 3+1 mode | |
| | | ∘ Port 0 will always be mapped to an even PFE. |
| | | ∘ Port 1 will always be mapped to an odd PFE. |
| | | ∘ All the ports other than 0 and 1 will be mapped to an even PFE or odd PFE. |
| Both the slices can support 800G port. | • 2+2 swapped mode | |
| | • 1+3 mode | |
| | • 3+1 mode | |
| | | ∘ Both the slices can support 800G port. |
| • One 400G non-channelized port per slice (using QSFP56-DD optics in QSFP112-DD cage). | • 2+2 swapped mode | |
| | • 1+3 mode | |
| | • 3+1 mode | |
| • Two 400G channelized ports per slice (using QSFP112-DD-2x400G breakout optics in QSFP112-DD cage). | | ∘ One 400G non-channelized port per slice (using QSFP56-DD optics in QSFP112-DD cage). |
| | | ∘ Two 400G channelized ports per slice (using QSFP112-DD-2x400G breakout optics in QSFP112-DD cage). |
| Each slice can support up to 16 ports with a breakout optics in QSFP112-DD cage. | • 2+2 swapped mode | |
| | | ∘ Each slice can support up to 16 ports with a breakout optics in QSFP112-DD cage. |
| | • 1+3 mode | |
| | • 3+1 mode | |
| | | ∘ The slice with 3 EMGs can support up to 24 ports with a breakout optics in QSFP112-DD cage. |
| | | ∘ The slice with 1 EMG can support up to 8 ports with a breakout optics in QSFP112-DD cage. |
| Each slice will have two EMGs (QSFP112-DD and 8x SFP112 EMGs). | • 2+2 swapped mode | |
| | | ∘ Each slice will have two EMGs (QSFP112-DD and 8x SFP112 EMGs). |
| | • 1+3 mode | |
| | • 3+1 mode | |
| | | ∘ One of the slices will have 3 EMGs (One QSFP 112-DD EMG and two 8x SFP 112 EMGs). The other slice will have 1 EMG (QSFP112-DD EMG). |

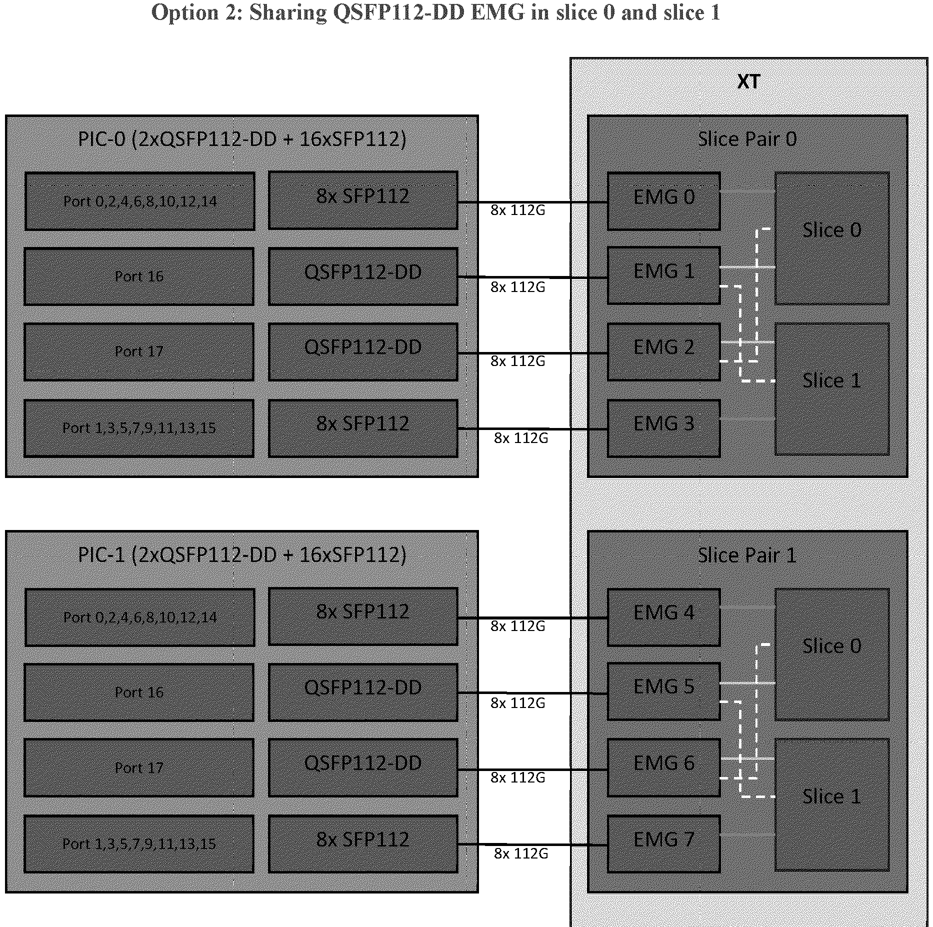

### Summary:

| **Without EMG Sharing** | **With EMG Sharing** | |
|---|---|---|
| • All the even PIC ports will always be mapped to even PFEs. | • 2+2 swapped mode | |
| | • 1+3 mode | |
| • All the odd PIC ports will always be mapped to odd PFEs. | • 3+1 mode | |
| | | ∘ Ports 0..14 will always be mapped to an even PFE. |
| | | ∘ Ports 1..15 will always be mapped to an odd PFE. |
| | | ∘ Ports 16 and 17 will be mapped to an even PFE or odd PFE. |
| Both the slices can support 800G port. | • 2+2 swapped mode | |
| | | ∘ Both the slices can support 800G port. |
| | • 1+3 mode | |
| | • 3+1 mode | |
| | | ∘ The slice with 3 EMGs can support 800G port. |
| | | ∘ The slice with 1 EMG can't support 800G port. |
| • One 400G non-channelized port per slice (using QSFP56-DD optics in QSFP112-DD cage). | • 2+2 swapped mode | |
| | | ∘ One 400G non-channelized port per slice (using QSFP56-DD optics in QSFP112-DD cage). |
| • Two 400G channelized ports per slice (using QSFP112-DD-2x400G breakout optics in QSFP112-DD cage). | | ∘ Two 400G channelized ports per slice (using QSFP112-DD-2x400G breakout optics in QSFP112-DD cage). |
| | • 1+3 mode | |
| | • 3+1 mode | |
| | | ∘ The slice with 3 EMGs can support two 400G non-channelized ports (using QSFP56-DD optics in both the QSFP112-DD cages). It can also support two 400G channelized ports (using QSFP112-DD-2x400G breakout optics in one of the QSFP112-DD cages). |
| | | ∘ The slice with 1 EMG can't support 400G ports. |
| Each slice can support up to 16 ports with a breakout optics in QSFP112-DD cage. | • 2+2 swapped mode | |
| | | ∘ Each slice can support up to 16 ports with a breakout optics in QSFP112-DD cage. |
| | • 1+3 mode | |
| | • 3+1 mode | |
| | | ∘ The slice with 3 EMGs can support up to 24 ports with a breakout optics in both the QSFP112-DD cages. |
| | | ∘ The slice with 1 EMG can support up to 8 ports (using 8x SFP112 cages). |
| Each slice will have two EMGs (8x SFP112 and QSFP112-DD EMGs). | • 2+2 swapped mode | |
| | | ∘ Each slice will have two EMGs (8x SFP112 and QSFP112-DD EMGs). |
| | • 1+3 mode | |
| | • 3+1 mode | |
| | | ∘ One of the slices will have 3 EMGs (One 8x SFP112 EMG and two QSFP112-DD EMGs). The other slice will have 1 EMG (8x SFP112 EMG). |

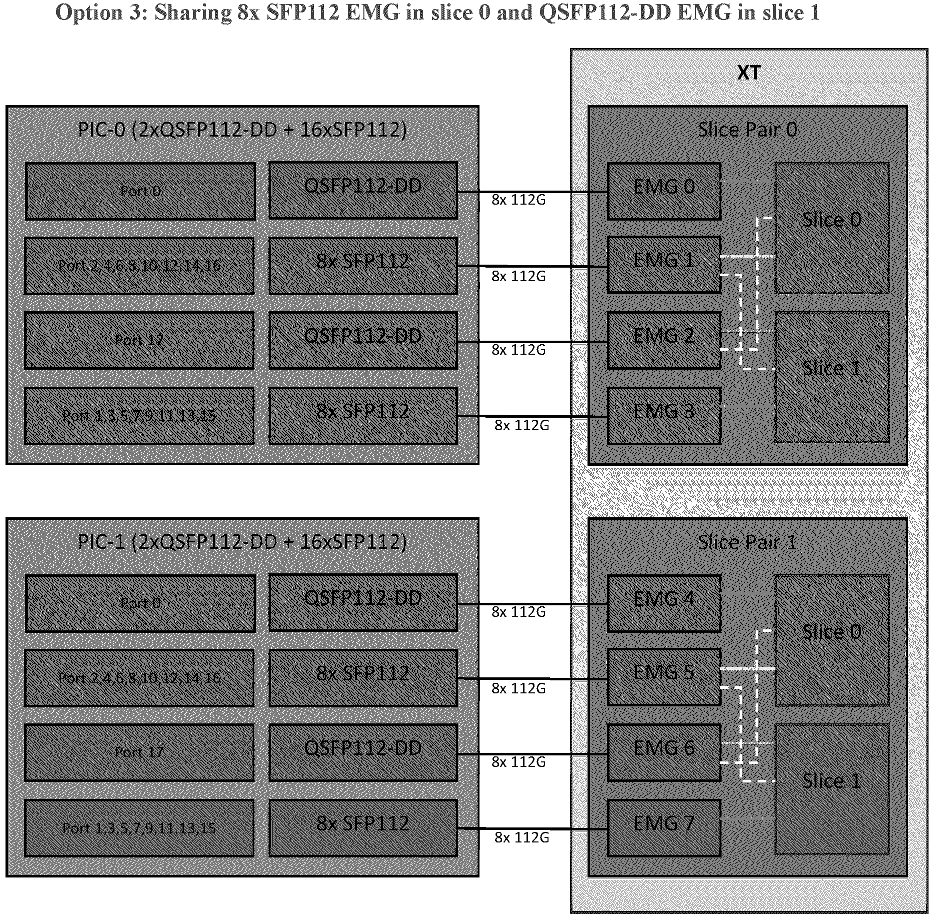

### Summary:

| **Without EMG Sharing** | **With EMG Sharing** | |
|---|---|---|
| • All the even PIC ports will always be mapped to even PFEs. | • 2+2 swapped mode | |
| | • 1+3 mode | |
| • All the odd PIC ports will always be mapped to odd PFEs. | • 3+1 mode | |
| | | ∘ Port 0 will always be mapped to an even PFE. |
| | | ∘ Ports 1..15 will always be mapped to an odd PFE. |
| | | ∘ Ports 2..16 and 17 will be mapped to an even PFE or odd PFE. |
| Both the slices can support 800G port. | • 2+2 swapped mode | |
| | • 3+1 mode | |
| | | ∘ Slice 0 can support 800G port. |
| | | ∘ Slice 1 can't support 800G port. |
| | • 1+3 mode | |
| | | ∘ Both the slices can support 800G port. |
| • One 400G non-channelized port per slice (using QSFP56-DD optics in QSFP112-DD cage). | • 2+2 swapped mode | |
| | • 3+1 mode | |
| | | ∘ Slice 0 can support two 400G non-channelized ports (using QSFP56-DD optics in both the QSFP112-DD cages). Slice 0 can also support two 400G channelized ports (using QSFP112-DD-2x400G breakout optics in one of the QSFP112-DD cages). |
| • Two 400G channelized ports per slice (using QSFP112-DD-2x400G breakout optics in QSFP112-DD cage). | | |
| | | ∘ Slice 1 can't support 400G ports. |
| | • 1+3 mode | |
| | | ∘ One 400G non-channelized port per slice (using QSFP56-DD optics in QSFP112-DD cage). |
| | | ∘ Two 400G channelized ports per slice (using QSFP112-DD-2x400G breakout optics in QSFP112-DD cage). |
| Each slice can support up to 16 ports with a breakout optics in QSFP 112-DD cage. | • 2+2 swapped mode | |
| | | ∘ Each slice can support up to 16 ports with a breakout optics in both the QSFP112-DD cages. |
| | • 1+3 mode | |
| | | ∘ Slice 0 can support up to 8 ports with a breakout optics in QSFP112-DD cage. |
| | | ∘ Slice 1 can support up to 24 ports with a breakout optics in QSFP112-DD cage. |
| | • 3+1 mode | |
| | | ∘ Slice 0 can support up to 24 ports with a breakout optics in both the QSFP112-DD cages. |
| | | ∘ Slice 1 can support up to 8 ports (using 8x SFP112 cages). |
| Each slice will have two EMGs (QSFP112-DD and 8x SFP112 EMGs). | • 2+2 swapped mode | |
| | | ∘ Slice 0 will have two EMGs (Two QSFP112-DD EMGs). |
| | | ∘ Slice 1 will have two EMGs (Two 8x SFP112 EMGs). |
| | • 1+3 mode | |
| | | ∘ Slice 0 will have 1 EMG (QSFP112-DD EMG). |
| | | ∘ Slice 1 will have 3 EMGs (Two 8x SFP112 EMGs and a QSFP112-DD EMG). |
| | • 3+1 mode | |
| | | ∘ Slice 0 will have 3 EMGs (Two QSFP112-DD EMGs and a 8x SFP112 EMG). |
| | | ∘ Slice 1 will have 1 EMG (8x SFP112 EMG). |

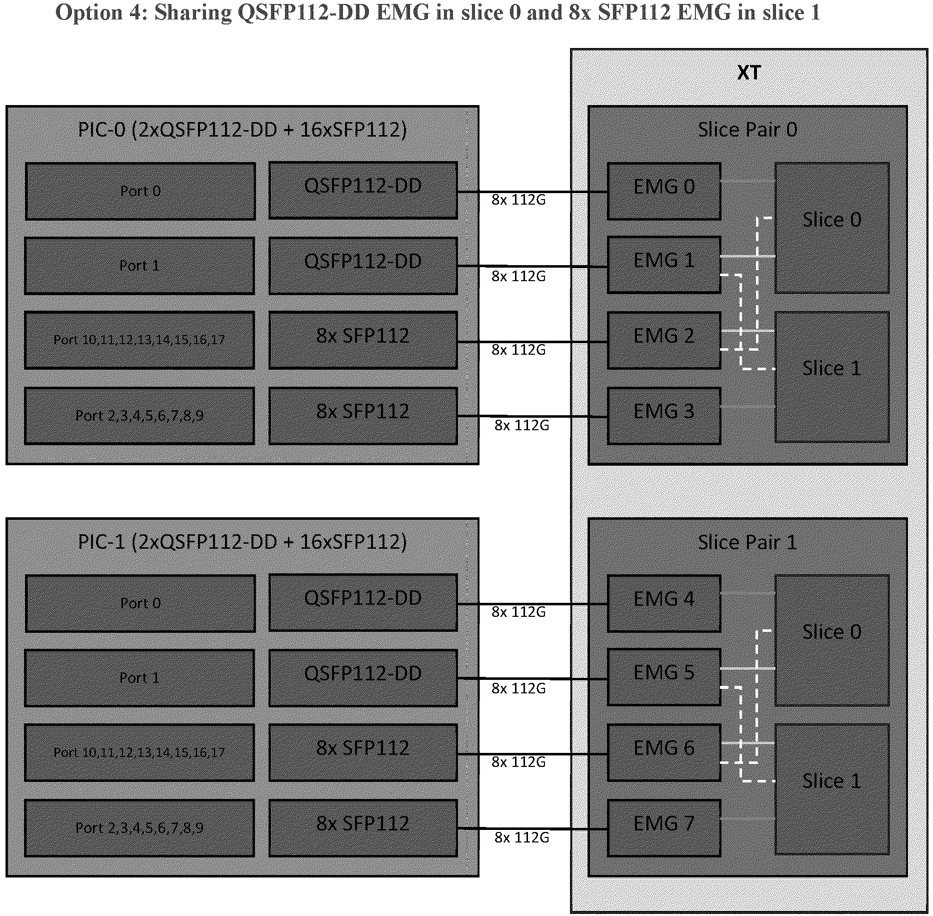

### Summary:

| **Without EMG Sharing** | **With EMG Sharing** | |
|---|---|---|
| • Ports 0 and 1 will always be mapped to an even PFE. | • 2+2 swapped mode | |
| | • 1+3 mode | |
| • Ports 2..9 and 10..17 will always be mapped to an odd PFE. | • 3+1 mode | |
| | | ∘ Port 0 will always be mapped to an even PFE. |
| | | ∘ Ports 2..9 will always be mapped to an odd PFE. |
| | | ∘ Ports 1 and 10..17 will be mapped to an even PFE or odd PFE. |
| • Slice 0 can support 800G port. | • 2+2 swapped mode | |
| • Slice 1 can't support 800G port. | • 1+3 mode | |
| | | ∘ Both the slices can support 800G port. |
| | • 3+1 mode | |
| | | ∘ Slice 0 can support 800G port. |
| | | ∘ Slice 1 can't support 800G port. |
| • Slice 0 can support two 400G non-channelized ports (using QSFP56-DD optics in both the QSFP112-DD cages). Slice 0 can also support two 400G channelized ports (using QSFP112-DD-2x400G breakout optics in one of the QSFP 112-DD cages). | • 2+2 swapped mode | |
| | • 1+3 mode | |
| | | ∘ Each slice can support one 400G non-channelized port (using QSFP56-DD optics in QSFP112-DD cage). Also, each slice can support two 400G channelized ports (using QSFP 112-DD-2x400G breakout optics in QSFP112-DD cage). |
| • Slice 1 can't support 400G ports. | • 3+1 mode | |
| | | ∘ Slice 0 can support two 400G non-channelized ports (using QSFP56-DD optics in both the QSFP112-DD cages). Slice 0 can also support two 400G channelized ports (using QSFP112-DD-2x400G breakout optics in one of the QSFP112-DD cages). |
| | | ∘ Slice 1 can't support 400G ports. |
| • Slice 0 can support up to 16 ports with a breakout optics in both the QSFP112-DD cages. | • 2+2 swapped mode | |
| | | ∘ Each slice can support up to 16 ports with a breakout optics in QSFP112-DD cage. |
| • Slice 1 can support up to 16 ports using the two 8x SFP112 cages. | • 1+3 mode | |
| | | ∘ Slice 0 can support up to 8 ports with a breakout optics in QSFP112-DD cage. |
| | | ∘ Slice 1 can support up to 24 ports with a breakout optics in QSFP112-DD cage. |
| | • 3+1 mode | |
| | | ∘ Slice 0 can support up to 24 ports with a breakout optics in both the QSFP112-DD cages. |
| | | ∘ Slice 1 can support up to 8 ports (using 8x SFP112 cages). |
| • Slice 0 will have two EMGs (Two QSFP112-DD EMGs). | • 2+2 swapped mode | |
| | | ∘ Each slice will have two EMGs (QSFP112-DD and 8x SFP112 EMGs). |
| • Slice 1 will have two EMGs (Two 8x SFP112 EMGs). | | |
| | • 1+3 mode | |
| | | ∘ Slice 0 will have 1 EMG (QSFP112-DD EMG). |
| | | ∘ Slice 1 will have 3 EMGs (Two 8x SFP112 EMGs and a QSFP112-DD EMG). |
| | • 3+1 mode | |
| | | ∘ Slice 0 will have 3 EMGs (Two QSFP112-DD EMGs and a 8x SFP112 EMG). |
| | | ∘ Slice 1 will have 1 EMG (8x SFP112 EMG). |

## Claims

1. For use in a data forwarding device including:
- a plurality of Ethernet MAC group (EMG) modules, each servicing a group of one or more Ethernet ports, and
- a plurality of packet forwarding engines (PFEs), each adapted to process packets received from one or more of the EMG modules,
a computer-implemented method comprising:
a) configuring, at a first time, the data forwarding device so that one of the PFEs receives packets from a first set of zero or more EMG modules; and
b) configuring, at a second time, the data forwarding device so that the one of the PFEs receives packets from a second set of zero or more EMG modules, wherein the second set of zero or more EMG modules is different from the first set of EMG modules.

2. The computer-implemented method of claim 1, wherein the first set of zero or more EMG modules terminate one or more links having a first total bandwidth,
wherein a throughput rate of the one of the PFEs is greater than the first total bandwidth,
wherein the second set of zero or more EMG modules terminate one or more links having a second total bandwidth, and
wherein the throughput rate of the one of the PFEs is greater than the second total bandwidth.

3. The computer-implemented method of claim 1 or 2, wherein the plurality of EMG modules, and the plurality of PFEs are provided on a single application specific integrated circuit (ASIC) chip, and wherein the plurality of EMG modules is greater in number than the plurality of PFEs.

4. A data forwarding device including:
a) a plurality of Ethernet MAC group (EMG) modules, each servicing a group of one or more Ethernet ports;
b) a plurality of packet forwarding engines (PFEs), each adapted to process packets received from one or more of the EMG modules;
c) a set of interconnect data links between the plurality of EMG modules and the plurality of PFEs, wherein at least one of the EMG modules can transmit packets to a selectable one of at least two of the plurality of PFEs; and
d) a user-interface module adapted to receive a configuration configuring an association of each of the plurality of EMG modules with each of the plurality of PFEs to define a set of active interconnect data links within the set of interconnect data links.

5. The data forwarding device of claim 4, wherein the user-interface module is adapted to receive a second configuration configuring a second association of each of the plurality of EMG modules with each of the plurality of PFEs, wherein the second association is different from the first association.

6. The data forwarding device of claim 4 or 5, wherein the user interface module allows each of at least some of the plurality of PFEs to be configured to enable or disable its being shared by more than one EMG module.

7. The data forwarding device of claim 4, 5 or 6, wherein the set of active interconnect data links within the set of interconnect data links permit one of the EMG modules to transmit packets to at least two PFEs.

8. The data forwarding device of any of claims 4 to 7, wherein the set of active interconnect data links within the set of interconnect data links permit one of the PFEs to receive packets from at least two EMG modules.

9. The data forwarding device of any of claims 4 to 8, wherein the plurality of EMG modules is greater in number than the plurality of PFEs, and
wherein at least two of the plurality of PFEs are provided as slices sharing on-chip memory.

10. The data forwarding device of any of claims 4 to 9, wherein each of the plurality of PFEs include a lookup sub-system, and wherein the lookup sub-system performs at least some of (A) packet processing, (B) route lookup, (C) label lookup, (D) firewall, and/or (E) packet classification.

11. The data forwarding device of any of claims 4 to 10 wherein a first one of the plurality of EMG modules is associated with a first set of at least one first interface module providing a first number of lanes of data,
wherein a second one of the plurality of EMG modules is associated with a second set of at least one second interface module providing a second number of lanes of data,
wherein the second number of lanes of data is greater than the first number of lanes of data, wherein the first set of at least one first interface module is associated with, and services, a first number of at least one port, and
wherein the second set of a least one second interface module is associated with, and services, a second number of at least one port.

12. The data forwarding device of any of claims 4 to 11, wherein the configuration configuring an association of each of the plurality of EMG modules with each of the plurality of PFEs to define a set of active interconnect data links within the set of interconnect data links is one of a plurality of configuration modes,
wherein in a first of the plurality of configuration modes, each PFE services the same number of EMG modules, and
wherein in a second of the plurality of configuration modes, a first PFE services a first number of EMG modules, and a second PFE services a second number of EMG modules, different from the first number.

13. The data forwarding device of any of claims 4 to 12, wherein the user-interface module is adapted to display an association of ports and PFEs based on the configuration configuring an association of each of the plurality of EMG modules with each of the plurality of PFEs.

14. The data forwarding device of any of claims 4 to 13, wherein the user-interface module is adapted to display, in response to a query to show information about a given interface, any of the plurality of PFEs associated with the given interface based on the configuration configuring an association of each of the plurality of EMG modules with each of the plurality of PFEs.

15. For use in a data forwarding device including:
- a plurality of Ethernet MAC group (EMG) modules, each servicing a group of one or more Ethernet ports,
- a plurality of packet forwarding engines (PFEs), each configured adapted to process packets received from one or more of the EMG modules, and
- a set of configurable interconnect data links between at least one of the EMGs and at least one of the PFEs,
a computer-implemented method comprising:
a) receiving a configuration input for configuring the set of configurable interconnect data links; and
b) applying the configuration input received such that a set of one or more PFEs receives packets from a set of one or more EMG modules, via one or more of the configurable interconnect data links, in accordance with the configuration input received.
